# EUROPÄISCHE PATENTSCHRIFT

(11) **EP 2 084 042 B1**
(45) Veröffentlichungstag und Bekanntmachung des Hinweises auf die Patenterteilung: **18.04.2012**
(21) Anmeldenummer: 07846861.8
(22) Anmeldetag: 28.11.2007
(51) Int. Cl.: B60R 22/41, B60R 22/405

(54) **SICHERHEITSGURTAUFROLLER MIT ABSCHALTUNG SEINES GURTBANDSENSITIVEN UND SEINES FAHRZEUGSENSITIVEN STEUERSYSTEMS**
SEATBELT RETRACTOR WITH DISABLING OF ITS BELT-STRAP-SENSITIVE AND ITS VEHICLE-SENSITIVE CONTROL SYSTEM
ENROULEUR DE CEINTURE DE SECURITE AVEC DESACTIVATION DE SON SYSTEME DE COMMANDE REAGISSANT À LA SANGLE DE CEINTURE ET DE SON SYSTEME DE COMMANDE REAGISSANT AU VEHICULE

(30) Priorität: 02.12.2006 DE 102006057018
(43) Veröffentlichungstag der Anmeldung: 05.08.2009
(73) Patentinhaber: Autoliv Development AB, 447 83 Vårgårda (SE)
(72) Erfinder: ARANDA I TORRENTS, Guillem, 22525 Hamburg (DE)
(74) Vertreter: Müller, Karl-Ernst
(86) Internationale Anmeldenummer: PCT/EP2007/010303
(87) Internationale Veröffentlichungsnummer: WO 2008/064870

(56) Entgegenhaltungen:
- DE-A1- 3 913 631
- DE-A1- 10 360 032
- US-A- 3 862 726

## Beschreibung

Die Erfindung betrifft einen selbstsperrenden Gurtaufroller insbesondere für Kraftfahrzeuge, mit einem fahrzeugsensitiven und einem gurtbandsensitiven Steuersystem für die eine in eine gehäusefeste Verzahnung einsteuerbare Blockierklinke aufweisende Blockiereinrichtung des Gurtaufrollers, wobei das Steuersystem eine sich mit der Gurtwelle drehende, an die Blockierklinke gekoppelte und zur Ausbildung der gurtbandsensitiven Steuerung masseträge ausgebildete Steuerscheibe mit einer Außenverzahnung zum Eingriff eines an einem Fahrzeugsensor angeordneten Sensorhebels umfasst, wobei wenigstens ein durch die Drehung der Gurtwelle gesteuerter, zwischen einer Zuschaltstellung und einer Abschaltstellung schwenkbarer Sperrhebel zur Abschaltung des Fahrzeugsensors in einem Funktionsbereich, in welchem fast der gesamte Sicherheitsgurt auf der Gurtwelle aufgewickelt ist, vorgesehen ist und wobei eine Einrichtung zur Abschaltung auch der gurtbandsensitiven Steuerung in dem vorgenannten Funktionsbereich des Gurtaufrollers vorgesehen ist.

Ein Gurtaufroller mit den vorgenannten Merkmalen ist in der DE 103 60 032 A1 beschrieben. Um zu verhindern, dass der Blockiermechanismus des Gurtaufrollers anspricht, wenn nach dem Ablegen des Sicherheitsgurtes seitens des Fahrzeuginsassen der Sicherheitsgurt unter der Wirkung der Aufwickelfeder aufgerollt beziehungsweise am Ende des Aufwickelweges abrupt abgebremst wird, ist in der vorgenannten Druckschrift bereits eine Abschaltung des gurtbandsensitiven wie auch des fahrzeugsensitiven Steuersystems vorgesehen, so dass ein unerwünschtes Blockieren der Gurtwelle am Ende des Aufwickelweges des Sicherheitsgurtes verhindert ist.

Hierzu ist bei dem bekannten Gurtaufroller auf der Gurtwelle eine sich mit der Gurtwelle drehende Sperrscheibe angeordnet, die mittels einer an ihr ausgebildeten Führungskurve einen ortsfest relativ zum Gehäuse verschwenkbar gelagerten Sperrhebel steuert, der in einem Funktionsbereich, in welchem fast der gesamte Sicherheitsgurt auf der Gurtwelle aufgewickelt ist, unmittelbar auf den mit der Steuerscheibe zusammenwirkenden Sensorhebel des Fahrzeugsensors wirkt und diesen festlegt und dadurch das fahrzeugsensitive Steuersystem abschaltet. Soweit das gurtbandsensitive Steuersystem durch die mit einer entsprechenden Masseträgheit ausgebildete Steuerscheibe verwirklicht ist, ist zur Abschaltung des gurtbandsensitiven Steuersystems ein weiterer, an der Gurtwelle gelagerten Riegel vorgesehen, der zu seiner Betätigung über eine Führungskulisse an den Sperrhebel zur Abschaltung des Fahrzeugsensors gekoppelt ist und in seiner durch die Sperrlage des Sperrhebels herbeigeführten Blockierstellung in Eingriff mit der Steuerscheibe steht und die Steuerscheibe drehfest mit der Gurtwelle verriegelt.

Weiterhin weist der bekannte Gurtaufroller eine von der Sperrscheibe über daran ausgebildete Schaltnocken gesteuerte ALR/ELR-Umschaltung zur Einstellung einer Kindersicherungsfunktion auf. Bei der ALR-Schaltstellung, die bei einem nahezu vollständigen Abzug des Sicherheitsgurtes zum Festlegen eines Kindersitzes erreicht wird, wird die Steuerscheibe an einer gehäusefesten Verzahnung verriegelt, so dass bei einem weiteren Gurtbandauszug in der ALR-Schaltstellung aufgrund der stillstehenden Steuerscheibe sofort eine Blockierung des Gurtaufrollers ausgelöst wird.

Mit dem bekannten Gurtaufroller ist der Nachteil verbunden, dass zur Abschaltung sowohl des fahrzeugsensitiven wie auch des gurtbandsensitiven Steuersystems verschiedene Hebel vorgesehen sind, wodurch der Aufbau des Gurtaufrollers kompliziert und der Herstellungsaufwand entsprechend groß ist. Es kommt hinzu, dass die Abschaltung der beiden Steuersysteme nur nacheinander erfolgen kann, weil zunächst die Betätigung des Sperrhebels für den Fahrzeugsensor Voraussetzung für die Steuerung des Riegels für das gurtbandsensitive Steuersystem ist. Da mehrere Steuervorgänge erforderlich sind, ist eine entsprechende Fehlerabhängigkeit nicht auszuschließen.

Der Erfindung liegt daher die Aufgabe zugrunde, einen selbstsperrenden Gurtaufroller mit den gattungsgemäßen Merkmalen hinsichtlich der Abschaltung des fahrzeugsensitiven wie auch des gurtbandsensitiven Steuersystems zu vereinfachen und die Sicherheit der Abschaltfunktion entsprechend zu verbessern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass zur Ausbildung ihrer Masseträgheit an der Steuerscheibe eine in eine Blockierstellung für die Steuerscheibe auslenkbare Trägheitsmasse schwenkbar gelagert ist und dass der Sperrhebel zur Abschaltung des Fahrzeugsensors an der Steuerscheibe gelagert ist und mit einem Schaltvorgang in seiner Abschaltstellung sowohl den Fahrzeugsensor abschaltet als auch die Trägheitsmasse in einer zur Blockierstellung unterschiedlichen Abschaltstellung festlegt. Soweit im Unterschied zum Stand der Technik die Masseträgheit der Steuerscheibe durch eine an der Steuerscheibe beweglich gelagerte Trägheitsmasse hergestellt ist, ergibt sich dadurch die vorteilhafte Funktion, mittels eines einzigen Sperrhebels sowohl den Fahrzeugsensor abzuschalten als auch die Trägheitsmasse in ihrer Bewegungsmöglichkeit festzulegen und dadurch das gurtbandsensitive Steuersystem gleichzeitig abzuschalten. Somit ist mit der Erfindung der Vorteil verbunden, dass nur ein einziges Bauteil und einziger Schaltvorgang erforderlich sind, um beide Steuersysteme gemeinsam abzuschalten. Da dieser Sperrhebel seinerseits ebenfalls an der Steuerscheibe selbst gelagert ist, sind alle für die Abschaltung erforderlichen Bauteile auf die Steuerscheibe konzentriert, so dass der Aufbau des Gurtaufrollers vereinfacht ist.

Im Hinblick auf die Abschaltung des Fahrzeugsensors ist nach einem Ausführungsbeispiel der Erfindung vorgesehen, dass die Steuerscheibe zweiteilig mit einer an die Gurtwelle gekoppelten drehbaren Plattform als Träger der Trägheitsmasse sowie des Sperrhebels und mit einem äußeren, gegenüber der Plattform verdrehbaren und sowohl eine Außenverzahnung zum Eingriff des Sensorhebels des Fahrzeugsensors als auch eine Innenverzahnung zum Eingriff des Sperrhebels in dessen Zuschaltstellung aufweisenden Ring ausgebildet ist. Soweit der Sensorhebel des außerhalb der Steuerscheibe angeordneten Fahrzeugsensors auf die Außenverzahnung des gesonderten Ringes zugreift, liegt in der Funktionsstellung der Steuerscheibe der Sperrhebel in Eingriff mit der Innenverzahnung des Ringes, so dass in dieser Stellung des Sperrhebels eine außenverzahnte Steuerscheibe gemäß dem Stand der Technik gebildet ist. Insofern ist es zur Abschaltung des fahrzeugsensitiven Steuersystems lediglich erforderlich, den Sperrhebel außer Eingriff mit der Innenverzahnung des gesonderten Ringes zu steuern, weil in diesem Fall selbst bei einem Eingriff des Sensorhebels in die Außenverzahnung des Ringes die Plattform als Träger des Sperrhebels gegenüber dem Ring durchdreht, so dass sich die Steuerscheibe mit der Gurtwelle weiterdreht und es insoweit nicht zu der erforderlichen Relativdrehung zwischen Steuerscheibe beziehungsweise Plattform und Gurtwelle kommt, um die Blockierung des Gurtaufrollers einzuleiten.

Hinsichtlich der Ausbildung des gurtbandsensitiven Steuersystems mittels der beweglich an der Steuerscheibe gelagerten Trägheitsmasse ist vorgesehen, dass die Trägheitsmasse einen in ihrer Blockierstellung in Eingriff mit einer innenseitig an einer das Steuersystem übergreifenden Gehäusekappe ausgebildeten Umfangsverzahnung gelangenden Blockierzahn aufweist. Insofern wird das gurtbandsensitive Steuersystem dadurch realisiert, dass bei Auftreten einer entsprechend hohen Drehbeschleunigung der Steuerscheibe beziehungsweise der Plattform als Träger der Trägheitsmasse die Trägheitsmasse ausgelenkt wird und mit ihrem Blockierzahn in Eingriff mit der gehäusefesten Verzahnung gelangt. Hierdurch wird die Trägheitsmasse festgelegt und hält aufgrund ihrer Lagerung an der Plattform der Steuerscheibe die weitere Drehbewegung der Steuerscheibe an, wodurch die für die Blockierung des Gurtaufrollers erforderliche Relativdrehung zwischen der Plattform der Steuerscheibe und der Gurtwelle eingeleitet wird.

Durch die Verschwenkung des Sperrhebels wird also mit einem Schaltvorgang sowohl der für die Funktion des Fahrzeugsensors erforderliche Ring der Steuerscheibe freigegeben als auch die Trägheitsmasse in ihrer Schwenkmöglichkeit festgelegt, so dass mit einem Schaltvorgang beide Steuersysteme außer Funktion gesetzt sind.

Soweit der erfindungsgemäße Gurtaufroller entsprechend dem Stand der Technik zusätzlich zu den gurtbandsensitiven und den fahrzeugsensitiven Steuersystemen auch eine ALR/ELR-Umschaltung aufweisen muss, ist nach einem Ausführungsbeispiel der Erfindung vorgesehen, dass an der Steuerscheibe ein zusätzlicher Schalthebel für die ALR/ELR-Umschaltung zwischen zwei Schaltstellungen schwenkbar gelagert ist, der in der ALR-Schaltstellung in Eingriff mit der Umfangsverzahnung der Gehäusekappe ausgesteuert ist und in der ELR-Schaltstellung außer Eingriff mit der Umfangsverzahnung steht. Da erfindungsgemäß auch der Schalthebel für die ALR/ELR-Umschaltung nunmehr an der Steuerscheibe selbst beziehungsweise der zugehörigen Plattform gelagert ist, ist der Bauaufwand entsprechend verringert. Hinsichtlich der Funktion der ALR/ELR-Umschaltung wird auf die Darstellung des Standes der Technik gemäß der gattungsbildenden DE 103 60 032 A1 verwiesen.

Soweit der Schaltarm während des ELR-Schaltzustandes sicher außer Eingriff mit der Umfangsverzahnung der Gehäusekappe zu halten ist, ist nach einem Ausführungsbeispiel der Erfindung vorgesehen, dass der Schalthebel mit einem Federarm an einem Strukturteil der Steuerscheibe festgelegt ist, wobei bei seiner radial ausgelenkten ALR-Schaltstellung der Federarm außer Eingriff mit dem Strukturteil der Steuerscheibe gelangt. Aufgrund der so eingestellten Federrastung sind Fehlsteuerungen des Schalthebels vermieden.

Zur Steuerung sowohl des Sperrhebels als auch des Schalthebels ist auf das aus der gattungsbildenden Schrift an sich bekannte Prinzip einer Steuerung der betreffenden Hebel über Steuerkurven zurückgegriffen, und hierzu ist nach einem Ausführungsbeispiel der Erfindung vorgesehen, dass zur gleichzeitigen Steuerung sowohl des Sperrhebels als auch des Schalthebels eine von der Gurtwelle angetriebene Taumelscheibe mit daran ausgebildeten Steuerkurven für an dem Sperrhebel und an dem Schalthebel jeweils ausgebildete und an den Steuerkurven geführte Führungsstifte vorgesehen und der Steuerscheibe benachbart angeordnet ist.

Hinsichtlich des Antriebes der Taumelscheibe ist nach einem Ausführungsbeispiel der Erfindung vorgesehen, dass die Taumelscheibe mit einer exzentrisch angeordneten, innenverzahnten Lagerbohrung auf einem außenverzahnten Ansatz der Steuerscheibe aufgesetzt ist, so dass die Drehbewegung der Steuerscheibe gemeinsam mit der Gurtwelle in eine Drehbewegung der Taumelscheibe umsetzbar ist. Zur Fixierung der Taumelbewegung der Taumelscheibe ist vorgesehen, dass die Taumelscheibe Taumelbewegung der Taumelscheibe ist vorgesehen, dass die Taumelscheibe in einer exzentrisch in der Gehäusekappe ausgebildeten Lagerung geführt ist. Auf diese Weise gibt die taumelnde Drehung der Taumelscheibe jeweils ein Maß für den Auf- beziehungsweise Abwickelzustand des Gurtbandes, welches für die Ansteuerung von Sperrhebel und Schalthebel umsetzbar ist.

Hinsichtlich der an der Taumelscheibe zur Steuerung sowohl des Sperrhebels als auch des Schalthebels ausgebildeten Steuerkurven ist nach einem Ausführungsbeispiel der Erfindung vorgesehen, dass die Taumelscheibe eine sich wenigstens über einen Teilumfang umlaufend erstreckende, axial in die Ebene der Führungsstifte von Sperrhebel und Schalthebel vorstehende Leiste sowie einen parallel zur Leiste vorstehenden Lagerkranz zur Ausbildung der Steuerkurven für die Steuerung der Führungsstifte vorgesehen sind. Dabei ist nach einem Ausführungsbeispiel der Erfindung vorgesehen, dass die Leiste mit einem radialen Abstand sowohl zum Lagerkranz als auch zum äußeren Umfang der Taumelscheibe angeordnet ist und an ihrer Innenseite einer Steuerkurve und an ihrer Außenseite eine Steuerkurve für den Führungsstift des Sperrhebels ausbildet und wenigstens eine Durchbrechung als radialer Übergangsabschnitt zum Durchtritt des Führungsstiftes zwischen der inneren Steuerkurve und der äußeren Steuerkurve vorgesehen ist.

Somit werden durch die Anordnung der Leiste mit den an ihr ausgebildeten Steuerkurven zwei Bereiche auf der Taumelscheibe voneinander getrennt, in denen sich die durch die Taumelscheibe gesteuerten Bewegungen der beiden Führungsstifte je nach dem Abwickelzustand des Gurtbandes vollziehen. Dabei sind nach einem Ausführungsbeispiel der Erfindung die Steuerkurven wegen der in Kombination mit der Drehbewegung der Taumelscheibe erfolgenden radialen Verlagerung der Taumelscheibe so ausgebildet, dass die Steuerkurven an ihren Ablaufbahnen für die Führungsstifte von Sperrhebel und Schalthebel eine gewellte Kontur zum Ausgleich der Taumelscheibenbewegungen gegenüber dem mit der Steuerscheibe umlaufenden Führungsstiften von Sperrhebel und Schalthebel aufweisen.

Gemäß einer ersten Ausführungsform der Erfindung ist vorgesehen, dass sich die Leiste mit den daran ausgebildeten Steuerkurven über den gesamten Umfang der Taumelscheibe erstreckt derart, dass der Führungsstift des Sperrhebels während der gesamten Aufroll- und Abrollbewegung des Gurtbandes an den Steuerkurven geführt ist.

Insbesondere zu Beginn des Gurtbandauszuges kann bei einer sehr hohen Auszugsbeschleunigung der Führungsstift des Sperrhebels so heftig gegen die innere Führungskurve der Leiste schlagen, dass der Führungsstift abbricht; in einem solchen Fall wäre ein weiterer Gebrauch des Gurtaufrollers nicht mehr gewährleistet, weil der Sperrhebel zur Herstellung der Steuerscheibenfunktion nicht mehr steuerbar wäre. Um hier Abhilfe zu schaffen, kann vorgesehen sein, dass sich die Leiste mit den daran ausgebildeten Steuerkurven nur über den Teilbereich des Umfangs der Taumelscheibe erstreckt, der von dem Führungsstift des Sperrhebels nach anfänglichem Gurtbandabzug in seiner nach außen in Eingriff mit der Innenverzahnung des Rings ausgesteuerten Stellung durchfahren wird, und dass in dem restlichen Umfangsbereich an der Taumelscheibe radial nach außen gerichtete, voneinander beabstandete Stege zur Aufnahme des Führungsstiftes des Sperrhebels zwischen sich angeordnet sind. Würde demnach der Gurt mit sehr hoher Anfangsbeschleunigung ausgezogen, so kann der Führungsstift des Sperrhebels zwischen die radial ausgerichteten Stege treten und wird insoweit nicht beansprucht. Da in einem solchen Fall gleichzeitig jedoch das gurtbandsensitive Steuersystem mit einer Auslenkung der Trägheitsmasse ansprechen würde, käme es zu einer Blockierung der Gurtwelle gegen weiteren Gurtauszug. Um die Blockierung zu lösen, muss Gurtband nachgelassen werden, bevor dann erneut eine dann langsamere Auszugsbewegung ohne eine Beanspruchung des an dem Sperrhebel befindlichen Führungsstiftes erfolgen kann.

Zum weiteren Schutz des Führungsstiftes des Sperrhebels kann in einem solchen Fall vorgesehen sein, dass die Stege in der beim anfänglichen einer angepassten, schräg zur Umfangsrichtung ausgerichteten Stellung angeordnet sind und an ihrem inneren Ende eine abgeflachte Einführfläche für die Einsteuerung des Führungsstiftes zwischen die Stege aufweisen, so dass der der schnellen Anfangsrotation der Taumelscheibe folgende Führungsstift des Sperrhebels auch nicht unmittelbar auf die Stege prallt.

Soweit der Schalthebel für die ELR-ALR-Umschaltung während des ELR-Schaltzustandes außer Eingriff mit der an der Gehäusekappe ausgebildeten Verzahnung steht, ist nach einem Ausführungsbeispiel der Erfindung vorgesehen, dass der äußere Umfang des Lagerkranzes der Taumelscheibe eine dritte Steuerkurve für die Steuerung des Führungsstiftes des Schalthebels während des ELR-Schaltzustandes des Schalthebels ausbildet. Hierbei ist zur besseren Führung des Führungsstiftes des Schalthebels während des ELR-Schaltzustandes vorgeschlagen, dass die zum Lagerkranz der Taumelscheibe gerichtete Anlagefläche des Führungsstiftes mit einer der äußeren Krümmung des Lagerkranzes entsprechenden Krümmung ausgebildet ist.

Zur bei der Umschaltung auf ALR-Betrieb erforderlichen radialen Auslenkung des Schalthebels ist vorgeschlagen, dass zwischen dem Lagerkranz und der Leiste ein radialer Steg zur radialen Aussteuerung des Führungsstiftes des Schalthebels aus seiner durch den Lagerkranz gebildeten Steuerkurve für den ELR-Schaltzustand zur Anlage an der inneren Steuerkurve der Leiste während des ALR-Schaltzustandes angeordnet ist, der von dem Führungsstift am Ende des Gurtbandauszuges erreicht wird, und dass die innere Steuerkurve in einem Umfangsabstand zum Steg einen radial einwärts zum Lagerkranz gerichteten Abschnitt zur Umsteuerung des Führungsstiftes von der inneren Steuerkurve der Leiste zur Steuerkurve am Lagerkranz aufweist.

Es kann auch der Fall auftreten, dass bei einem sehr schnellen Gurtbandauszug bei Erreichen des ELR/ALR-Umschaltpunktes der am Schalthebel befindliche Führungsstift abbricht, so dass eine Rückschaltung auf den ELR-Betrieb wegen einer fehlenden Rückführung des Schalthebels an auf den ELR-Betrieb wegen einer fehlenden Rückführung des Schalthebels an der inneren Steuerkurve der Leiste nicht möglich ist. Um in einem solchen Fall gleichwohl eine Rückschaltung für den Schalthebel zu ermöglichen, kann vorgesehen sein, dass Sperrhebel und Schalthebel in unterschiedlichen in Axialrichtung der Steuerscheibe versetzten Ebenen angeordnet sind und der Sperrhebel einen in die Bewegungsebene des Schalthebels reichenden und den Führungsstift tragenden Aufsatz aufweist, der in wenigstens einer Schaltstellung des Sperrhebels mit dem Schalthebel zusammenwirkt. Wenn nämlich der Sperrhebel beim Aufrollen des Gurtbandes und genügend aufgewickelten Gurtband von der äußeren Steuerkurve in die innere Steuerkurve wechselt, drückt der Sperrhebel über seinen Aufsatz den Schalthebel auch bei fehlendem Führungsstift in dessen den ELR-Betrieb kennzeichnende Anlage an der dritten Steuerkurve am Umfang des Lagerkranzes zurück. Aus konstruktiven Gründen kann zur Herstellung des nötigen Bewegungsfreiraumes für den Schaltstift vorgesehen sein, dass sich die Trägheitsmasse in ihrer axialen Höhe über beide Bewegungsebenen von Sperrhebel und Schalthebel erstreckt und einen in der Bewegungsebene des Schalthebels angeordneten Ausschnitt zur Aufnahme des Schalthebels aufweist. Hiermit lässt sich eine platzsparende kompakte Bauweise der auf der Steuerscheibe anzuordnenden Bauteile erreichen.

Nach einem Ausführungsbeispiel der Erfindung ist vorgesehen, dass an dem Sperrhebel zusätzlich wenigstens ein in seiner Abschaltstellung in eine an der Gurtwelle ausgebildete Umfangsausnehmung in Eingriff gelangender Sperrzahn zur festen Verbindung von Gurtwelle und Steuerscheibe angeordnet ist, so dass in der Abschaltstellung des Sperrhebels der Sperrhebel zusätzlich die Steuerscheibe beziehungsweise deren Plattform mit der Gurtwelle undrehbar verriegelt, so dass im Rahmen einer Sicherheitsfunktion eine die Einleitung der Blockierung des Gurtaufrollers bewirkende Relativbewegung von Steuerscheibe und Gurtwelle gegeneinander ausgeschlossen ist.

Zur Verbesserung der Montage des Gurtaufrollers ist nach einem Ausführungsbeispiel der Erfindung vorgesehen, dass die Steuerscheibe mit den daran gelagerten Funktionsteilen Trägheitsmasse, Sperrhebel und Schalthebel sowie die Taumelscheibe in die topfförmig ausgebildete Abdeckkappe zur Bildung einer Vormontage-Baugruppe einsetzbar und darin festlegbar ist. Insofern braucht bei der Endmontage des Gurtaufrollers lediglich noch die Gurtwelle mit einem an ihr ausgebildeten Wellenfortsatz an die Vormontage-Baugruppe angeschlossen werden.

Im einzelnen kann nach einem Ausführungsbeispiel der Erfindung vorgesehen sein, dass Steuerscheibe und Taumelscheibe gemeinsam auf einem Adapterstück angeordnet sind und das Adapterstück einerseits in der Gehäusekappe und andererseits an einem Fortsatz der Gurtwelle festlegbar ist und dadurch die Lagerung der Gurtwelle in der Gehäusekappe ausbildet, wobei vorgesehen sein kann, dass das Adapterstück jeweils mit Gehäusekappe und Wellenfortsatz verrastbar ist. Weiterhin kann vorgesehen sein, dass das Adapterstück im Formschluss auf dem Wellenfortsatz festgelegt ist.

Die Vormontage des erfindungsgemäßen Gurtaufrollers ist dann erleichtert, soweit nach einem Ausführungsbeispiel vorgesehen ist, dass das Adapterstück die Steuerscheibe auf einem umlaufenden Flansch trägt und dadurch die mit der Gehäusekappe zu verrastende Vormontage-Baugruppe bildet, wobei der Wellenfortsatz rastend in das an der Gehäusekappe festgelegte Adapterstück einsteckbar ist.

In der Zeichnung sind Ausführungsbeispiele der Erfindung wiedergegeben, welche nachstehend beschrieben sind. Es zeigen:
- Fig. 1: die Systemseite eines selbstsperrenden Gurtaufrollers mit gurtbandsensitiven und fahrzeugsensitiven Steuersystemen in einer Explosionsdarstellung,
- Fig. 2: den Gegenstand der Figur 1 in einer anderen Perspektive,
- Fig. 3: die Systemseite des Gurtaufrollers bei zusammengebauten Einzelteilen in einer Draufsicht,
- Fig. 4: die Steuerscheibe mit darauf angeordneten Funktionselementen in einer Perspektivansicht bei Zuschaltung des fahrzeugsensitiven und des gurtbandsensitiven Steuersystems,
- Fig. 5: den Gegenstand der Figur 4 bei Abschaltung der Steuersysteme,
- Fig. 6: ein anderes Ausführungsbeispiel der Steuerscheibe gemäß Figuren 4 bzw. 5 bei Zuschaltung des fahrzeugsensitiven und des gurtbandsensitiven Steuersystems im ELR-Betrieb in einer Perspektivdarstellung,
- Fig. 7: den Gegenstand der Figur 6 im ALR-Betrieb,
- Fig. 8: den Gegenstand der Figur 6 bzw. Figur 7 bei Abschaltung des fahrzeugsensitiven und des gurtbandsensitiven Steuersystems,
- Fig. 9: einen Ausschnitt der Gehäusekappe in einer Perspektivansicht,
- Fig. 10: die Taumelscheibe mit den daran ausgebildeten Steuerkurven in einer Einzeldarstellung,
- Fig. 11: die Taumelscheibe gemäß Figur 10 mit den Bewegungsbahnen für die Führungsstifte von Sperrhebel und Schalthebel an den Steuerkurven,
- Fig. 12: die Taumelscheibe gemäß Figur 10 in einer abgewandelten Ausführungsform,
- Fig. 13: die Kombination von Steuerscheibe mit aufgesetzter Taumelscheibe in einer Perspektivansicht,
- Fig. 14: die Steuerscheibe gemäß Figur 7 einschließlich zugeordneter Steuerkurven der Taumelscheibe in einer Perspektivansicht im ALR-Betrieb,
- Fig. 15: die Steuerscheibe gemäß Figur 8 einschließlich zugeordneter Steuerkurven der Taumelscheibe in einer Perspektivansicht bei Abschaltung des fahrzeugsensitiven und des gurtbandsensitiven Steuersystems.

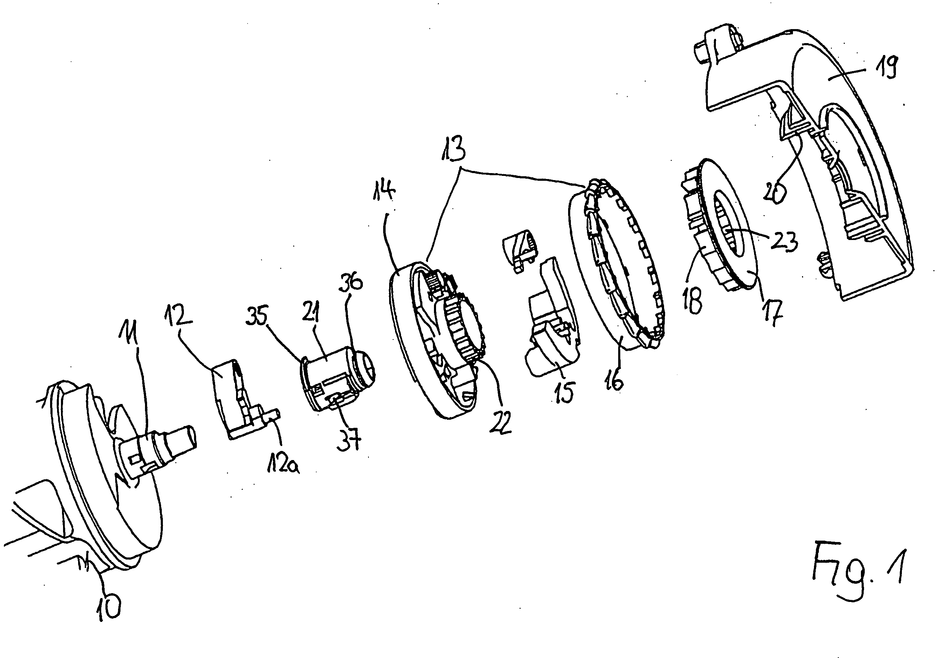

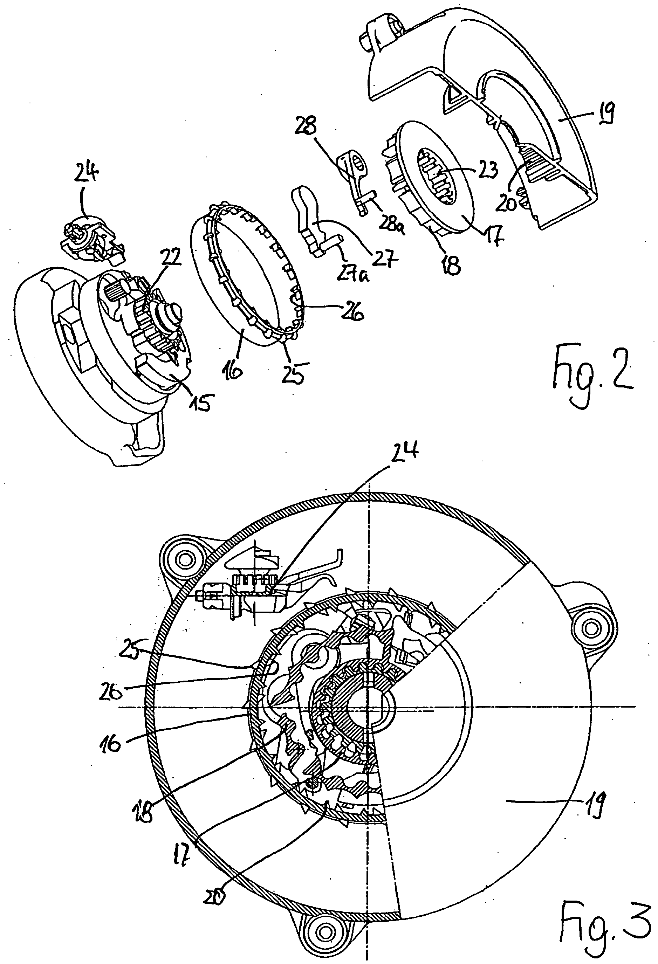

Wie sich zunächst aus Figuren 1 und 2 ergibt, besteht die Systemseite eines selbstsperrenden Gurtaufrollers aus der Gurtwelle 10 mit einem davon abstehenden Wellenfortsatz 11, der als Halterung und als Antrieb für die an die Gurtwelle 10 angeschlossenen Systemteile dient. An der Gurtwelle 10 ist eine radial zum Eingriff in eine nicht dargestellte gehäusefeste Blockierverzahnung ausschwenkbare Blockierklinke 12 gelagert, die einen in der Wellenachse abstehenden Führungsstift 12a aufweist, der in eine an einer Steuerscheibe 13 ausgebildete Kulisse eingreift derart, dass sich die Steuerscheibe 13 einerseits jeweils gemeinsam mit der Gurtwelle 10 dreht, wobei im Falle eines Ansprechens des noch zu beschreibenden fahrzeugsensitiven und/oder gurtbandsensitiven Steuersystems die Steuerscheibe 13 in ihrer weiteren Drehbewegung blockiert wird, so dass eine Relativdrehung zwischen der stillstehenden Steuerscheibe 13 und der sich weiterdrehenden Gurtwelle 10 ergibt, wobei diese Relativdrehung durch den in der Steuerscheibe 13 geführten Führungsstift 12a in die radiale Auslenkung der Blockierklinke 12 umgesetzt wird. Dieses radiale Blockierprinzip ist im Stand der Technik bekannt.

Wesentlicher Funktionsbestandteil des Gurtaufrollers ist die mit 13 bezeichnete Steuerscheibe, die aus einer Plattform 14 und aus einem die Plattform 14 außen umschließenden Ring 16 besteht. An der Plattform 14 der Steuerscheibe 13 ist eine Trägheitsmasse 15 schwenkbeweglich gelagert, die das noch zu beschreibende gurtbandsensitive Steuersystem ausbildet.

Der Steuerscheibe benachbart und funktionell damit zusammenwirkend ist eine Taumelscheibe 17 angeordnet, die an ihrer der Steuerscheibe 13 zugewandten Unterseite Steuerkurven 18 aufweist. Die Taumelscheibe 17 ist mit einer eine Innenverzahnung 23 aufweisenden Ausnehmung auf einen mit einer Außenverzahnung versehenen Ansatz 22 der Plattform 14 der Steuerscheibe 13 aufsetzbar, so dass die sich mit der Gurtwelle 10 drehende Steuerscheibe 13 die Taumelscheibe 17 antreibt und drehend mitnimmt.

Die Systemseite des Gurtaufrollers ist von einer Gehäusekappe 19 umschlossen und abgedeckt, die an ihrer Innenseite eine kappenfeste Verzahnung 20 aufweist.

Die vorstehend beschriebenen Funktionsteile der Systemseite des Gurtaufrollers werden durch ein Adapterstück 21 zusammengehalten, welches mit einem abstehenden Flansch 35 die Plattform 14 der Steuerscheibe 13 trägt. An seinem der Gehäusekappe 19 zugewandten Ende weist das Adapterstück 21 eine Rastnut 36 auf, mit der das Adapterstück 21 in eine entsprechende Rastgestaltung an der Innenseite der Gehäusekappe 19 einsteckbar und daran verrastbar ist. Da die Steuerscheibe 13 sowie die Taumelscheibe 17 auf dem Adapterstück 21 angeordnet sind, ergibt sich eine Vormontage-Baugruppe, indem die Steuerscheibe 13 und die Taumelscheibe 17 mit den zugehörigen, noch zu beschreibenden Funktionsteilen über das Adapterstück 21 an der Gehäusekappe 19 festlegbar sind.

Der Wellenfortsatz 11 der Gurtwelle 10 greift mit einer Formschluss.-verbindung in das Adapterstück 21 ein, wobei das Adapterstück 21 über ein Rastfenster 37 im Rahmen der Endmontage des Gurtaufrollers mit dem Wellenfortsatz 11 der Gurtwelle 10 verrastbar ist.

Wie sich weiterhin aus Figur 2 ergibt, weist der Ring 16 sowohl eine Außenverzahnung 25 als auch eine Innenverzahnung 26 auf. Außerhalb der Steuerscheibe ist an der Innenseite der Gehäusekappe 19 ein Fahrzeugsensor 24 festgelegt, der mit seinem Sensorhebel bei Auftreten entsprechender Fahrzeugbeschleunigungen beziehungsweise Fahrzeugverzögerungen in an sich bekannter Weise in Eingriff mit der Außenverzahnung 25 des Rings 16 der Steuerscheibe 13 kommt und dadurch den Ring 16 in seiner weiteren Drehbewegung blockiert.

An der Plattform 14 der Steuerscheibe 13 ist ein Sperrhebel 27 zwischen einer Zuschaltstellung und einer Abschaltstellung schwenkbar gelagert, wobei in der Zuschaltstellung der Sperrhebel 27 in Eingriff mit der Innenverzahnung 26 des Rings 16 steht. In dieser Zuschaltstellung ist also über den Sperrhebel 27 der außenverzahnte Ring 16 mit der Plattform 14 verbunden, so dass im Sinne des Standes der Technik eine funktionsfähige Steuerscheibe 13 gebildet ist. Greift der Sensorhebel des Fahrzeugsensors 24 in dieser Zuschaltstellung in die Außenverzahnung 25 der Steuerscheibe 13 ein, so wird die Steuerscheibe 13 in ihrer weiteren Drehbewegung angehalten und es kommt zur Blockierbewegung der Blockierklinke 12. Wird dagegen der Sperrhebel 27 außer Eingriff mit der Innenverzahnung 26 des Rings 16 ausgesteuert, so bleibt zwar bei Eingriff des Sensorhebels des Fahrzeugsensors 24 in die Außenverzahnung 25 des Rings 16 der Ring 16 stehen, jedoch dreht sich die an die Gurtwelle angeschlossene Plattform 14 weiter, so dass die erforderliche Relativdrehung nicht zustande kommt; das fahrzeugsensitive Steuersystem ist abgeschaltet.

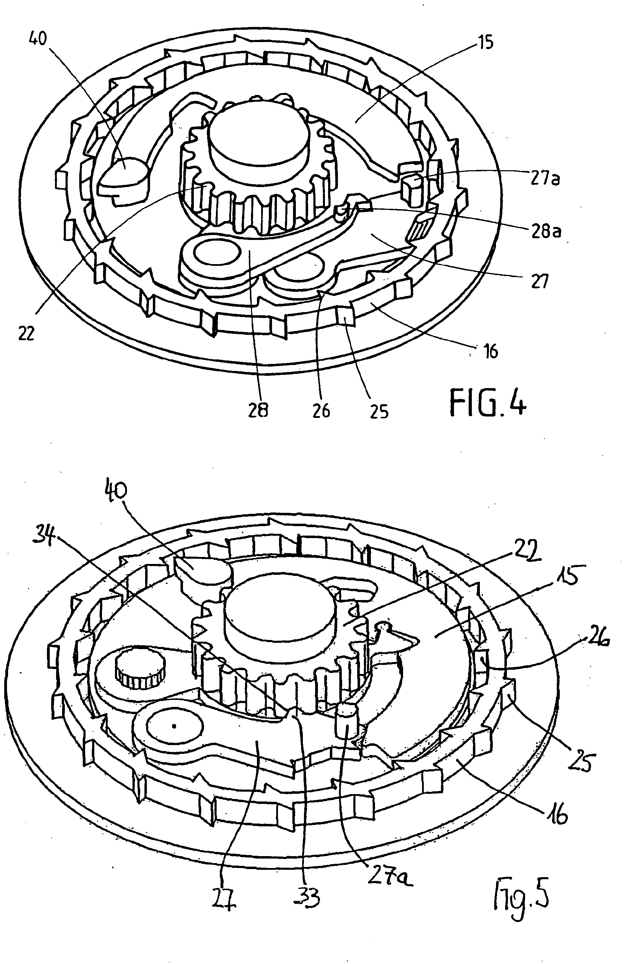

Wie sich dazu weiterhin aus Figur 4 entnehmen lässt, ist das gurtbandsensitive Steuersystem durch die Anordnung der an der Plattform 14 beweglich gelagerten Trägheitsmasse 15 verwirklicht. Bei normalen Wellendrehungen liegt die Trägheitsmasse 15 innerhalb der Kontur der Plattform 14, so dass sich die Plattform 14 beziehungsweise die Steuerscheibe 13 gemeinsam mit der Gurtwelle 10 dreht. Kommt es zu einer schnellen Gurtauszugsbewegung, so bleibt die Trägheitsmasse 15 hinter der Drehung der Plattform 14 zurück und wird dadurch ausgelenkt. Bei dieser Auslenkung greift die Trägheitsmasse 15 mit einem an ihr ausgebildeten Blockierzahn 40 in die kappenfeste Verzahnung 20 der Gehäusekappe 19, so dass die weitere Drehbewegung der Steuerscheibe 13 angehalten wird und es zu der die Blockierung des Gurtaufrollers herbeiführenden Relativdrehung zwischen Steuerscheibe 13 und Gurtwelle 10 kommt.

Aus Figur 5 ist zu entnehmen, dass der Sperrhebel 27 auf der Plattform 14 derart angeordnet ist, dass er in seiner außer Eingriff mit der Innenverzahnung 26 stehenden, nach innen eingeschwenkten Stellung gleichzeitig in Anlage an der schwenkbeweglich gelagerten Trägheitsmasse 15 kommt und diese dadurch gegen eine Schwenkbewegung festlegt. Da die Trägheitsmasse somit durch den Sperrhebel 27 festgelegt ist, kann die vorstehend beschriebene Funktion der Trägheitsmasse 15 bei einem schnellen Gurtbandauszug nicht mehr eintreten, so dass insoweit durch die einzige Schaltbewegung des Sperrhebels 27 sowohl das fahrzeugsensitive Steuersystem als auch das gurtbandsensitive Steuersystem abgeschaltet bzw. außer Funktion gesetzt ist.

Es ist Figur 5 ferner zu entnehmen, dass als zusätzliche Absicherung für die Abschaltung der Steuersysteme an dem Hebel 27 ein in Richtung zum Wellenfortsatz 11 der Gurtwelle 10 vorstehender Sperrzahn 33 ausgebildet ist, der in der Abschaltstellung des Sperrhebels 27 (Figur 5) in Eingriff mit einer an dem Umfang des Wellenfortsatzes 11 vorgesehenen Umfangsausnehmung 34 gelangt, so dass in dieser Eingriffsstellung Gurtwelle 10 und Steuerscheibe 13 undrehbar miteinander verriegelt sind. Auch dadurch ist eine für die Blockierung des Gurtaufrollers erforderliche Relativdrehung zwischen der Steuerscheibe 13 und der Gurtwelle 10 ausgeschlossen.

Soweit in Übereinstimmung mit dem Stand der Technik der Gurtaufroller auch eine ALR/ELR-Umschaltung aufzuweisen hat, ist für diese Funktion an der Plattform 14 ein gesonderter Schalthebel 28 gelagert, der für die ALR-Schaltstellung, in welcher die Steuerscheibe 13 gegen eine weitere Drehung festgelegt ist, nach außen in Eingriff mit der kappenfesten Verzahnung 20 der Gehäusekappe 19 zu schwenken ist.

Um die entsprechenden Schwenk- bzw. Schaltbewegungen von Sperrhebel 27 und Schalthebel 28 durchzuführen, weisen die beiden Hebel jeweils einen Führungsstift 27a bzw. 28a auf, wobei diese Führungsstifte 27a, 28a in den Steuerkurven 18 der Taumelscheibe 17 geführt sind, so dass über die Drehung der Taumelscheibe 17 die Steuerung von Sperrhebel 27 und Schalthebel 28 erfolgt.

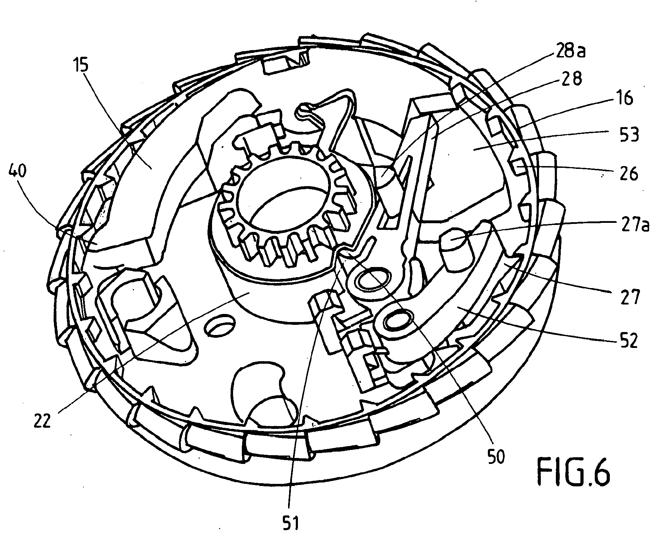

In den Figuren 6 bis 8 ist ein gegenüber den Figuren 4 und 5 leicht abgewandeltes Ausführungsbeispiel der Steuerscheibe 13 mit den daran angeordneten Funktionsteilen dargestellt.

Soweit die in Figur 6 dargestellte Steuerscheibe 13 in ihrer Funktionsstellung bei Zuschaltung sowohl des fahrzeugsensitiven als auch des gurtbandsensitiven Steuersystems, also im ELR-Schaltzustand, dem in Figur 4 dargestellten und bereits beschriebenen Ausführungsbeispiel entspricht, ist auch bei dem in Figur 6 dargestellten Ausführungsbeispiel der Sperrhebel 27 in Eingriff mit der Innenverzahnung 26 des Ringes 16 ausgelenkt. Der Schalthebel 28 befindet sich in seiner eingeschwenkten Stellung, wobei der Schalthebel 28 mit einem inneren Federarm 50 in eine an dem Ansatz 22 der Plattform 14 der Steuerscheibe 13 ausgebildete Ausnehmung 51 eingreift. Bei dem dargestellten Ausführungsbeispiel sind Sperrhebel 27 und Schalthebel 28 in unterschiedlichen, in Axialrichtung der Steuerscheibe 13 versetzten Ebenen angeordnet, wobei der Sperrhebel 27 einen in die Bewegungsebene des Schalthebels 28 reichenden und den Führungsstift 27a tragenden Aufsatz 52 aufweist, der in einer noch zu beschreibenden Schaltstellung des Sperrhebels 27 mit dem Schalthebel 28 zusammenwirkt. Gleichzeitig erstreckt sich die Trägheitsmasse 15 in ihrer axialen Höhe über beide Bewegungsebenen von Sperrhebel 27 und Schalthebel 28 und weist einen in der Bewegungsebene des Schalthebels 28 angeordneten Ausschnitt 53 zur Aufnahme des Schalthebels 28 auf, so dass der Schalthebel 28 den Steuerbewegungen der Trägheitsmasse 15 jeweils folgt. Mit dieser Maßnahme ist eine platzsparende Bauweise der Steuerscheibe 13 mit den an ihr ausgebildeten Funktionsteilen erreicht. Die Anordnung des in der Bewegungsebene des Schalthebels 28 liegenden Aufsatzes 52 auf dem Sperrhebel 27 hat dabei den Sinn, für den Fall, dass es bei einem sehr schnellen Gurtbandauszug bei Erreichen des ELR-/ALR-Umschaltpunktes zu einem Abbrechen des am Schalthebel befindlichen Führungsstiftes 28a gekommen sein sollte, über die Abschaltungsbewegung des Sperrhebels 27 mittels der zugeordneten Steuerkurve gleichzeitig auch über die Anlage des Aufsatzes 52 an dem Schalthebel 28 den Schalthebel 28 und damit das gurtbandsensitive Steuersystem in dessen Abschaltstellung zu bringen, in welcher eine Blockierung der Gurtwelle nicht mehr möglich ist.

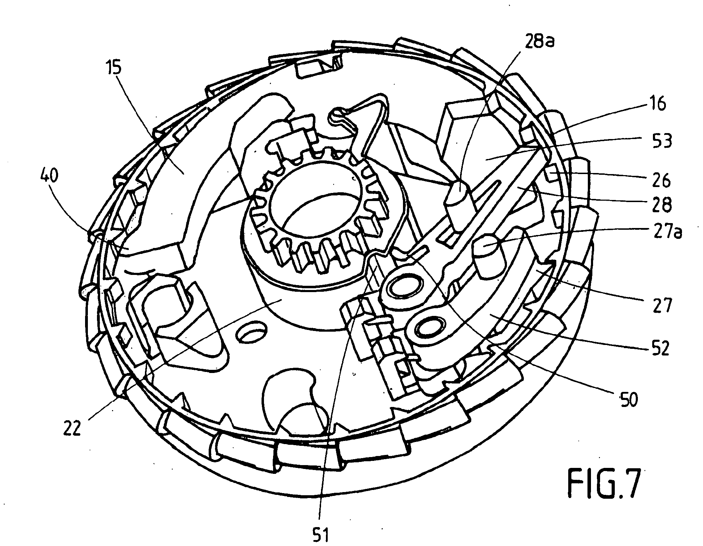

In Figur 7 ist entsprechend der ALR-Schaltzustand bei der in Figur 6 im einzelnen dargestellten Steuerscheibe verdeutlicht. Es ist erkennbar, dass der Schalthebel 28 radial nach außen verschwenkt ist, wobei sein Federarm 50 aus der Ausnehmung 51 herausgetreten ist und mit entsprechender Vorspannung an dem Absatz 22 der Plattform 14 anliegt. Kommt es zu einer Rücksteuerung des Schalthebels 28 bei der Umschaltung vom ALR-Schaltzustand in den ELR-Schaltzustand rastet der Federarm 50 wieder in die Ausnehmung 51 ein, so dass der ELR-Schaltzustand definiert ist.

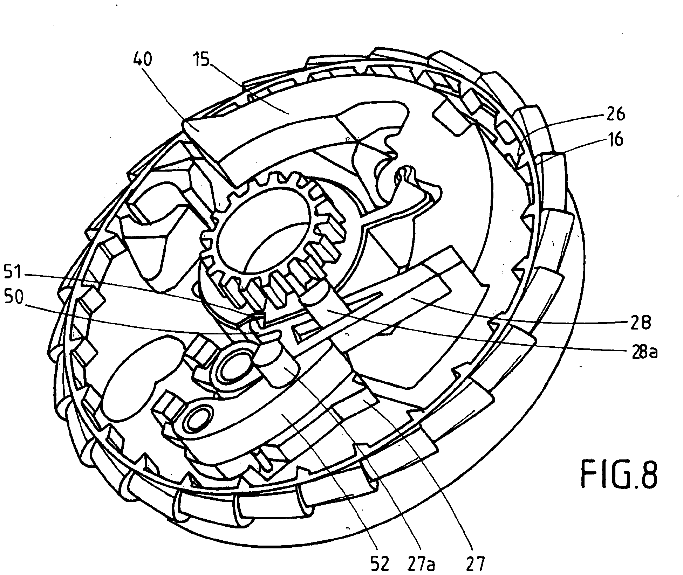

In Figur 8 schließlich ist die der bereits beschriebenen Figur 5 entsprechende Abschaltung sowohl des fahrzeugsensitiven als auch des gurtbandsensitiven Steuersystems dargestellt, bei der der Sperrhebel 27 nach innen außer Eingriff mit der Innenverzahnung 26 des Ringes 16 gesteuert ist und dabei gleichzeitig die Trägheitsmasse 15 festlegt, so dass auch das gurtbandsensitive Steuersystem nicht ansprechen kann. Gleichzeitig befindet sich auch der Schalthebel 28 in einer eingeschwenkten Stellung, damit keine Blockierung der Gurtwelle herbeigeführt werden kann.

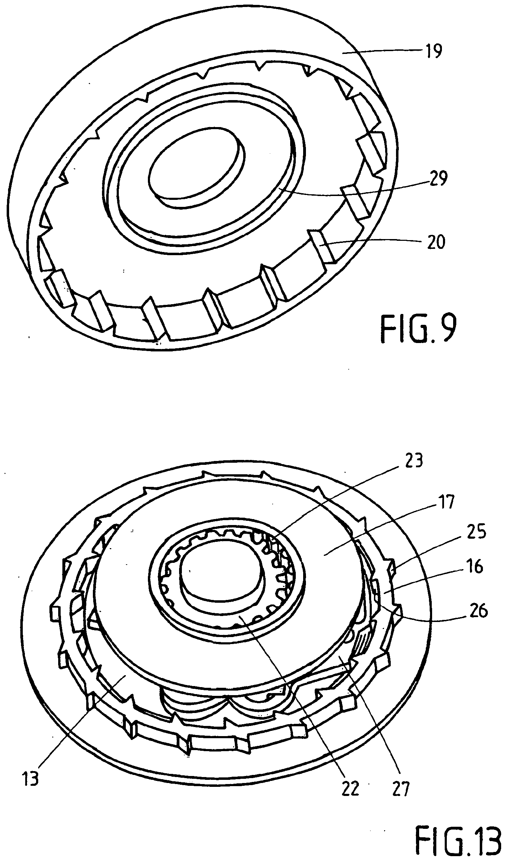

Wie sich Figur 9 entnehmen lässt, ist an der Innenseite der Gehäusekappe 19 eine exzentrische Lagerung 29 für die Taumelscheibe 17 ausgebildet, so dass der über den Eingriff der Innenverzahnung 23 der Taumelscheibe 17 mit dem außenverzahnten Ansatz 22 der Steuerscheibe 13 beziehungsweise der Plattform 14 bewirkte Drehantrieb der Taumelscheibe 17 gleichzeitig in eine exzentrisch-radiale Verlagerung der Taumelscheibe 17 umsetzbar ist.

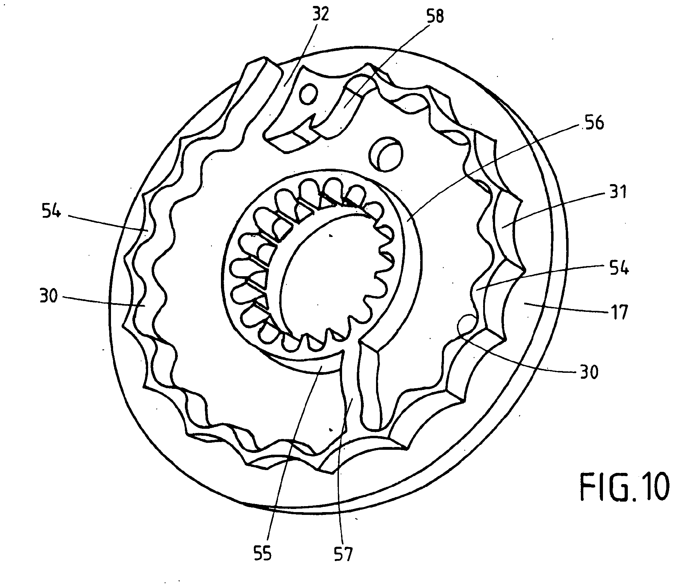

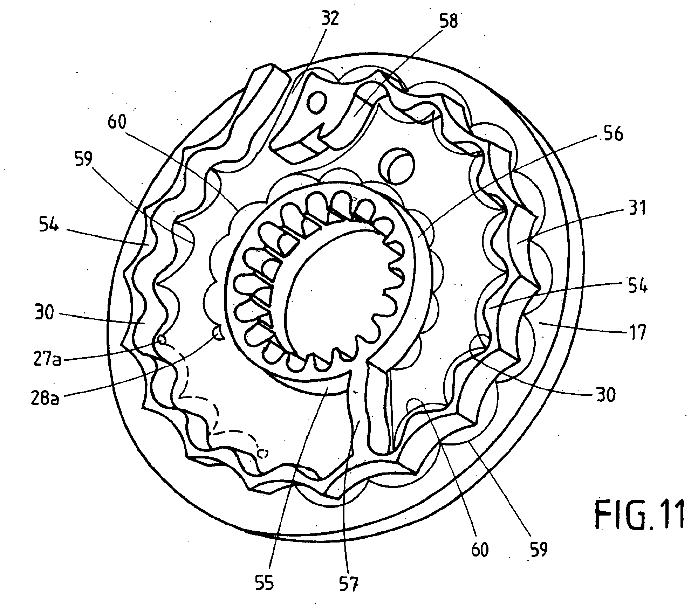

In den Figuren 10 und 11 ist die Ausbildung der zur Steuerung der Schaltbewegungen von Sperrhebel 27 und Schalthebel 28 eingerichteten Taumelscheibe 17 verdeutlicht. Wie sich zunächst aus Figur 10 ergibt, weist die Taumelscheibe 17 eine sich über ihren Umfang erstreckende, axial in die Ebene der Führungsstifte 27a, 28a von Sperrhebel 27 und Schalthebel 28 vorstehende Leiste 54 sowie einen parallel zur Leiste 54 vorstehenden Lagerkranz 55 für die Lagerung der Taumelscheibe 17 auf. Die Leiste 54 ist mit einem radialen Abstand sowohl zum Lagerkranz 55 als auch zum äußeren Umfang der Taumelscheibe 17 angeordnet und bildet an ihrer Innenseite eine innere Steuerkurve 30 und an ihrer Außenseite eine äußere Steuerkurve 31 für den Führungsstift 27a des Sperrhebels 27 aus, und es ist wenigstens eine Durchbrechung 32 als radialer Übergangsabschnitt zum Durchtritt des Führungsstiftes 27a zwischen der inneren Steuerkurve 30 und der äußeren Steuerkurve 31 vorgesehen.

Die Steuerkurven 30, 31 weisen an ihren Ablaufbahnen für die Führungsstifte 27a, 28a von Sperrhebel 27 und Schalthebel 28 eine gewellte Kontur zum Ausgleich der Taumelscheibenbewegungen gegenüber den mit der Steuerscheibe 13 umlaufenden Führungsstiften 27a, 28a von Sperrhebel 27 und Schalthebel 28 auf. Aufgrund der sich über den gesamten Umfang erstreckenden Leiste 54 mit Steuerkurven 30, 31 ist der Führungsstift 27a des Sperrhebels 27 während der gesamten Aufroll- und Abrollbewegung der Gurtwelle an den Steuerkurven 30, 31 geführt. Die Taumelscheibe 17 ist in ihrer Lagerung so ausgelegt, dass eine volle Umdrehung der Taumelscheibe 17 den beim Abwickeln beziehungsweise Aufwickeln des Gurtbandes zwischen dem vollständigen Aufwickelzustand und dem vollständigen Abwickelzustand durchgeführten Umdrehungen der Gurtwelle entspricht. Je nach Länge des auf der Gurtwelle des Gurtaufrollers aufgewickelten Gurtbandes kann die Gurtwelle beispielsweise 14 bis 16 Umdrehungen ausführen, bei einer vollständigen Umdrehung der Taumelscheibe 17.

Zur Steuerung des Schalthebels 28 weist die Taumelscheibe 17 noch eine dritte Steuerkurve 56 auf, die durch den äußeren Umfang des Lagerkranzes 55 der Taumelscheibe 17 gebildet ist. Ferner ist an der dem Umschaltpunkt von ELR- auf den ALR-Schaltzustand des Gurtaufrollers bei nahezu vollständigem Gurtbandauszug zwischen dem Lagerkranz 55 und der Leiste 54 ein radialer Steg 57 zur radialen Aussteuerung des Führungsstiftes 28a des Schalthebels 28 aus seiner durch den Lagerkranz 55 gebildeten Steuerkurve 56 für den ELR-Schaltzustand bis zur Anlage an der inneren Steuerkurve 30 der Leiste 54 während des ALR-Zustandes angeordnet, wobei bei der Abrollbewegung des Gurtbandes von der Gurtwelle der Führungsstift 28a den Steg 57 am Ende des Gurtbandauszuges erreicht und durch den Steg 57 in seine ausgeschwenkte Stellung umgesteuert wird. Ferner weist die Leiste 54 im Bereich ihrer inneren Steuerkurve 30 noch einen radial einwärts zum Lagerkranz 55 hin gerichteten Abschnitt 58 auf, mittels dessen nach einem dem Weg des Führungsstiftes 28a des Schalthebels 28 von dem Steg 57 längs der inneren Steuerkurve 30 entsprechenden Aufrollbewegung des Gurtbandes auf die Gurtwelle der Führungsstift 28a von der inneren Steuerkurve 30 zur Steuerkurve 56 am Lagerkranz 55 umgesteuert wird, womit der ELR-Schaltzustand wieder hergestellt ist.

In der der Figur 10 entsprechenden Figur 11 ist der Weg des Führungsstiftes 27a zur Steuerung des Sperrhebels 27 und der Weg des Führungsstiftes 28a zur Steuerung des Schalthebels 28 für die in der Figur 10 dargestellte Steuerkontur verdeutlicht. Dabei ist der Führungsstift 27a in der Stellung bei vollständig aufgewickeltem Gurtband dargestellt; die gestrichelte Darstellung macht nur deutlich, dass in bestimmten Ausführungsformen eine größere Gurtbandmenge auf der Gurtwelle aufgewickelt sein kann. Wie sich aus der Darstellung der Weglinie 59 für die Bewegung des Führungsstiftes 27a ergibt, folgt zu Beginn des Abwickelns des Gurtbandes der Führungsstift 27a zunächst der inneren Steuerkurve 30 bis zum Erreichen der Durchbrechung 32, über die der Führungsstift 27a radial nach außen ausgelenkt wird und dann beim weiteren Abwickeln des Gurtbandes der äußeren Steuerkurve 31 folgt, in welcher der Sperrhebel 27 in Eingriff mit der Verzahnung 26 des Ringes 16 eingesteuert ist und damit die Funktion der Steuerscheibe 13 herstellt. Entsprechend folgt der Steuerstift 27 beim Aufwickeln des Gurtbandes der Weglinie 59 bis zu seiner Anfangsstellung.

Entsprechend ist für die Bewegung des Führungsstiftes 28a des Schalthebels 28 die Weglinie 60 dargestellt, und hier ist erkennbar, dass der Führungsstift 28a zunächst bis zum Erreichen des durch den Steg 57 definierten Umschaltpunktes an der Steuerkurve 56 des Lagerkranzes 55 geführt ist, wodurch die eingeschwenkte Stellung des Schalthebels 28 definiert ist. Ist das Gurtband (fast) vollständig von der Gurtwelle abgewickelt und soll deswegen der ALR-Schaltzustand herbeigeführt werden, so wird der Führungsstift 28a über den Steg 57 radial nach außen ausgelenkt. Soll nach einem gewissen Maß eines Aufwickelns des Gurtbandes auf die Gurtwelle erneut vom ALR-Schaltzustand auf den ELR-Schaltzustand umgeschaltet werden, so folgt zunächst der Führungsstift 28a der inneren Steuerkurve 30 während der Rückdrehung der Gurtwelle, bis der Führungsstift 28a den im Bereich der Durchbrechung 32 angeordneten Abschnitt 58 erreicht, über den der Führungsstift 28a wieder in Anlage an dem Lagerkranz 55 und damit in den Verlauf der Steuerkurve 56 rückgesteuert wird, in welcher der Schalthebel 28 außer Eingriff mit der Verzahnung 20 der Gehäusekappe 19 steht.

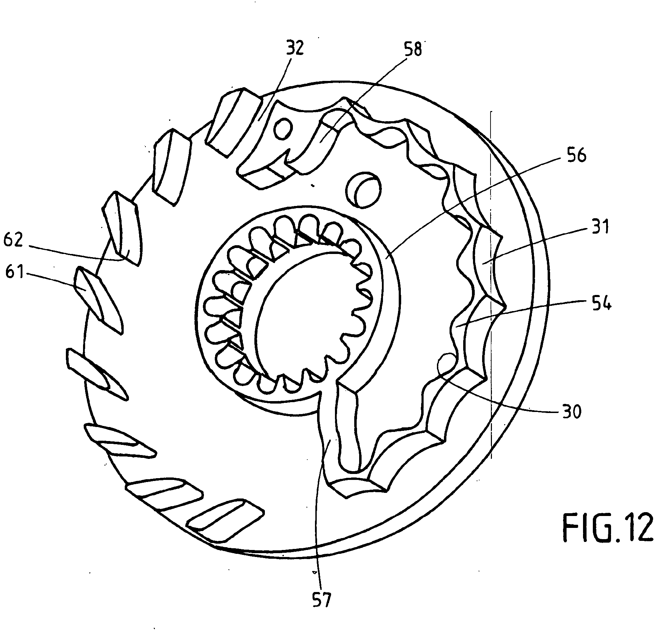

In Figur 12 ist ein anderes Ausführungsbeispiel der Taumelscheibe 17 wiedergegeben. Hierbei erstreckt sich die Leiste 54 mit den daran ausgebildeten Steuerkurven 30, 31 nur über den Teilbereich des Umfangs der Taumelscheibe 17, der von dem Führungsstift 27a des Sperrhebels 27 nach anfänglichem Gurtbandabzug in seiner nach außen in Eingriff mit der Innenverzahnung 26 des Rings 16 ausgesteuerten Stellung durchfahren wird. In dem anderen, restlichen Umfangsbereich sind an der Taumelscheibe 17 radial nach außen gerichtete Stege 60 angeordnet derart, dass bei entsprechenden Steuerbewegungen der Führungsstift 27a des Sperrhebels 27 zwischen den Stege 61 eintreten kann. Soweit der Steuerstift 27a beim anfänglichen Gurtbandabzug in Umfangsrichtung eine gebogene Linie durchfährt, sind die Stege 61 mit einer angepassten, schräg zur Umfangsrichtung ausgerichteten Stellung angeordnet und weisen an ihrem inneren Ende eine abgeflachte Einführfläche 62 für die Einsteuerung des Führungsstiftes 27a in die jeweils zwischen den Stegen 61 bestehenden Abstände auf. Mit dieser Ausgestaltung soll erreicht werden, dass bei hohen Anfangsbeschleunigungen bei einem Gurtbandauszug der Führungsstift 27a nicht gegen die beim zu Figuren 10 und 11 beschriebenen Ausführungsbeispiel in diesem Bereich ausgebildete Steuerkurve 30 schlägt und unter Umständen abbricht, sondern dass der Führungsstift 27a radial nach außen in die zwischen den Stegen 61 bestehende Abstände eintreten kann und dabei keiner Beanspruchung unterliegt. Da in einem solchen Fall einer hohen Beschleunigung beim Gurtbandauszug gleichzeitig das gurtbandsensitive Steuersystem mit einer Blockierung der Gurtwelle ansprechen würde, wäre die Weiterdrehung der Gurtwelle unterbunden, so dass auch der Führungsstift 27a keine Bewegung in Umfangsrichtung der Taumelscheibe 17 mehr ausführt. Wird zur Lösung dieses Blockierzustandes das Gurtband nachgelassen, rutscht der Steg 27a aus dem Bereich der Stege 61 wieder heraus und kann dann bei einer entsprechend langsameren Auszugsbewegung seinen Weg bis zur Durchbrechung 32 nehmen.

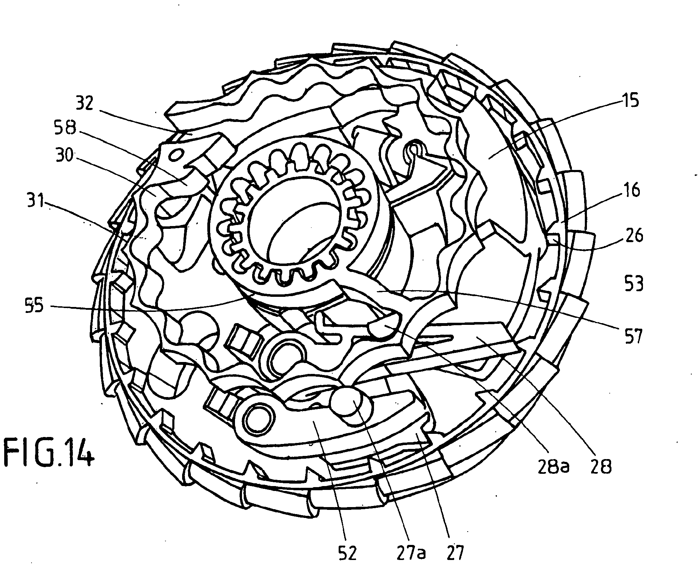

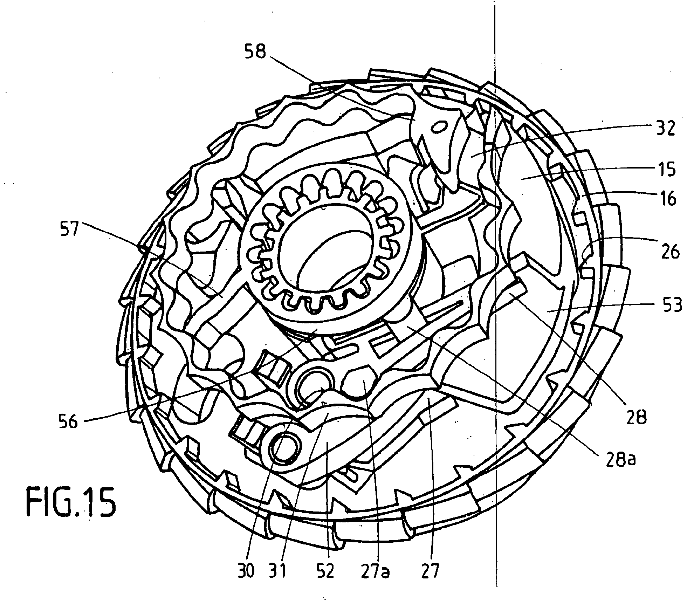

In den Figuren 14 und 15 ist jeweils nochmals die Steuerscheibe 13 mit den an ihr angeordneten Hebeln 27, 28 in deren Zusammenwirken mit den Steuerkurven 30, 31, 56 der Taumelscheibe 17 dargestellt. Dabei zeigt Figur 14 wiederum den ALR-Schaltzustand, bei dem der Schalthebel 28 in seiner in Eingriff mit der Verzahnung 20 der Gehäusekappe 19 ausgesteuerten Stellung steht, in welcher der Führungsstift 28a an der inneren Steuerkurve 30 der Leiste 54 anliegt. In dieser Stellung befindet sich der Sperrhebel 27 in seiner in die Außenverzahnung 26 des Rings 16 eingesteuerten Stellung, und insofern liegt der Führungsstift 27a an der äußeren Steuerkurve 31. Es besteht insoweit also sofortige Blockierbereitschaft bei einem Gurtbandauszug, wie dies für den ALR-Betrieb vorgesehen ist.

Figur 15 zeigt noch einmal den Zustand, in welchem sowohl das fahrzeugsensitive als auch das gurtbandsensitive Steuersystem abgeschaltet ist. Insofern ist der Führungsstift 27a des Sperrhebels 27 an der inneren Steuerkurve 30 geführt, so dass der Sperrhebel 27 außer Eingriff mit der Außenverzahnung 27 des Ringes 16 steht, so dass der Ring 16 bei Zugriff des Fahrzeugsensors durchdreht und keine Blockierung eingeleitet wird. Gleichzeitig liegt der Sperrhebel 27 gegen die Trägheitsmasse 15 an und blockiert damit auch das Ansprechen des gurtbandsensitiven Steuersystems. Der Schalthebel 28 liegt in seiner inneren Stellung mit Anlage des Führungsstiftes 28a an der Steuerkurve 56, was aber für die Abschaltung von gurtbandsensitivem- und fahrzeugsensitiven Steuersystem ohne funktionelle Bedeutung ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller insbesondere für Kraftfahrzeuge, mit einem fahrzeugsensitiven und einem gurtbandsensitiven Steuersystem für die eine in eine gehäusefeste Verzahnung einsteuerbare Blockierklinke (12) aufweisende Blockiereinrichtung des Gurtaufrollers, wobei das Steuersystem eine sich mit der Gurtwelle (10) drehende, an die Blockierklinke (12) gekoppelte und zur Ausbildung der gurtbandsensitiven Steuerung masseträge ausgebildete Steuerscheibe (13) mit einer Außenverzahnung (25) zum Eingriff eines an einem Fahrzeugsensor angeordneten Sensorhebels umfasst, wobei wenigstens ein durch die Drehung der Gurtwelle gesteuerter, zwischen einer Zuschaltstellung und einer Abschaltstellung schwenkbarer Sperrhebel (27) zur Abschaltung des Fahrzeugsensors (24) in einem Funktionsbereich, in welchem fast der gesamte Sicherheitsgurt auf der Gurtwelle (10) aufgewickelt ist, vorgesehen ist und wobei eine Einrichtung zur Abschaltung auch der gurtbandsensitiven Steuerung in dem vorgenannten Funktionsbereich des Gurtaufrollers vorgesehen ist, **dadurch gekennzeichnet, dass** zur Ausbildung ihrer Masseträgheit an der Steuerscheibe (13) eine in eine Blockierstellung für die Steuerscheibe (13) auslenkbare Trägheitsmasse (15) schwenkbar gelagert ist und dass der Sperrhebel (27) zur Abschaltung des Fahrzeugsensors (24) an der Steuerscheibe (13) gelagert ist und mit einem Schaltvorgang in seiner Abschaltstellung sowohl den Fahrzeugsensor (24) abschaltet als auch die Trägheitsmasse (15) in einer zur Blockierstellung unterschiedlichen Abschaltstellung festlegt.

2. Selbstsperrender Gurtaufroller nach Anspruch 1, **dadurch gekennzeichnet, dass** die Steuerscheibe (13) zweiteilig mit einer an die Gurtwelle (10) gekoppelten drehbaren Plattform (14) als Träger der Trägheitsmasse (15) sowie des Sperrhebels (27) und mit einem äußeren, gegenüber der Plattform (14) verdrehbaren und sowohl eine Außenverzahnung (25) zum Eingriff des Sensorhebels des Fahrzeugsensors (24) als auch eine Innenverzahnung (26) zum Eingriff des Sperrhebels (27) in dessen Zuschaltstellung aufweisenden Ring (16) ausgebildet ist.

3. Selbstsperrender Gurtaufroller nach Anspruch 1 oder 2, **dadurch gekennzeichnet, dass** die Trägheitsmasse (15) einen in ihrer Blockierstellung in Eingriff mit einer innenseitig an einer das Steuersystem übergreifenden Gehäusekappe (19) ausgebildeten Umfangsverzahnung (20) gelangenden Blockierzahn (40) aufweist.

4. Selbstsperrender Gurtaufroller nach einem der Ansprüche 1 bis 3, **dadurch gekennzeichnet, dass** an der Steuerscheibe (13) ein zusätzlicher Schalthebel (28) für die Umschaltung zwischen dem ELR-Schaltzustand und dem ALR-Schaltzustand schwenkbar gelagert ist, der in seiner ALR-Schaltstellung in Eingriff mit der Umfangsverzahnung (20) der Gehäusekappe (19) ausgesteuert ist und in seiner ELR-Schaltstellung außer Eingriff mit der Umfangsverzahnung (20) steht.

5. Selbstsperrender Gurtaufroller nach Anspruch 4, **dadurch gekennzeichnet, dass** der Schalthebel (28) mit einem Federarm an einem Strukturteil (22) der Steuerscheibe (13) festgelegt ist, wobei bei seiner radial ausgelenkten ALR-Schaltstellung der Federarm außer Eingriff mit dem Strukturteil der Steuerscheibe gelangt.

6. Selbstsperrender Gurtaufroller nach einem der Ansprüche 1 bis 5, **dadurch gekennzeichnet, dass** zur gleichzeitigen Steuerung sowohl des Sperrhebels (27) als auch des Schalthebels (28) eine von der Gurtwelle (10) angetriebene Taumelscheibe (17) mit daran ausgebildeten Steuerkurven (30, 31) für an dem Sperrhebel (27) und an dem Schalthebel (28) jeweils ausgebildete und an den Steuerkurven (30, 31) geführte Führungsstifte (27a, 28a) vorgesehen und der Steuerscheibe (13) benachbart angeordnet ist.

7. Selbstsperrender Gurtaufroller nach Anspruch 6, **dadurch gekennzeichnet, dass** die Taumelscheibe (17) mit einer exzentrisch angeordneten, innenverzahnten Lagerbohrung auf einem außenverzahnten Ansatz (22) der Steuerscheibe (13) aufgesetzt ist.

8. Selbstsperrender Gurtaufroller nach einem der Ansprüche 1 bis 7, **dadurch gekennzeichnet, dass** die Taumelscheibe (17) in einer exzentrisch in der Gehäusekappe (19) ausgebildeten Lagerung (29) geführt ist.

9. Selbstsperrender Gurtaufroller nach einem der Ansprüche 6 bis 8, **dadurch gekennzeichnet, dass** die Taumelscheibe (17) eine sich wenigstens über einen Teilumfang umlaufend erstreckende, axial in die Ebene der Führungsstifte (27a, 28a) von Sperrhebel (27) und Schalthebel (28) vorstehende Leiste sowie einen parallel zur Leiste vorstehenden Lagerkranz zur Ausbildung der Steuerkurven für die Steuerung der Führungsstifte (27a, 28a) vorgesehen sind.

10. Selbstsperrender Gurtaufroller nach Anspruch 9, **dadurch gekennzeichnet, dass** die Leiste mit einem radialen Abstand sowohl zum Lagerkranz als auch zum äußeren Umfang der Taumelscheibe angeordnet ist und an ihrer Innenseite eine innere Steuerkurve (30) und an ihrer Außenseite eine äußere Steuerkurve (31) für den Führungsstift (27a) des Sperrhebels (27) ausbildet und wenigstens eine Durchbrechung (32) als radialer Übergangsabschnitt zum Durchtritt des Führungsstiftes (27a) zwischen der inneren Steuerkurve (30) und der äußeren Steuerkurve (31) vorgesehen ist..

11. Selbstsperrender Gurtaufroller nach einem der Ansprüche 6 bis 10, **dadurch gekennzeichnet, dass** die Steuerkurven (30, 31) an ihren Ablaufbahnen für die Führungsstifte (27a, 28a) von Sperrhebel (27) und Schalthebel (28) eine gewellte Kontur zum Ausgleich der Taumelscheibenbewegungen gegenüber den mit der Steuerscheibe (13) umlaufenden Führungsstiften (27a, 28a) von Sperrhebel (27) und Schalthebel (28) aufweisen.

12. Selbstsperrender Gurtaufroller nach einem der Ansprüche 9 bis 11, **dadurch gekennzeichnet, dass** sich die Leiste mit den daran ausgebildeten Steuerkurven (30, 31) über den gesamten Umfang der Taumelscheibe (17) erstreckt derart, dass der Führungsstift (27a) des Sperrhebels (27) während der gesamten Aufroll- und Abrollbewegung des Gurtbandes an den Steuerkurven (30, 31) geführt ist.

13. Selbstsperrender Gurtaufroller nach einem der Ansprüche 9 bis 11, **dadurch gekennzeichnet, dass** sich die Leiste mit den daran ausgebildeten Steuerkurven (30, 31) nur über den Teilbereich des Umfangs der Taumelscheibe (17) erstreckt, der von dem Führungsstift (27a) des Sperrhebels (27) nach anfänglichem Gurtbandabzug in seiner nach außen in Eingriff mit der Innenverzahnung (26) des Rings (16) ausgesteuerten Stellung durchfahren wird, und dass in dem restlichen Umfangsbereich an der Taumelscheibe (17) radial nach außen gerichtete, voneinander beabstandete Stege zur Aufnahme des Führungsstiftes (27a) des Sperrhebels (27) zwischen sich angeordnet sind.

14. Selbstsperrender Gurtaufroller nach Anspruch 13, **dadurch gekennzeichnet, dass** die Stege in der beim anfänglichen Gurtbandabzug von dem Führungsstift (27a) durchfahrenen Umfangsrichtung mit einer angepassten, schräg zur Umfangsrichtung ausgerichteten Stellung angeordnet sind und an ihrem inneren Ende eine abgeflachte Einführfläche für die Einsteuerung des Führungsstiftes (27a) zwischen die Stege aufweisen.

15. Selbstsperrender Gurtaufroller nach einem der Ansprüche 6 bis 14, **dadurch gekennzeichnet, dass** der äußere Umfang des Lagerkranzes der Taumelscheibe (17) eine dritte Steuerkurve für die Steuerung des Führungsstiftes (28a) des Schalthebels (28) während des ELR-Schaltzustandes des Schalthebels (28) ausbildet.

16. Selbstsperrender Gurtaufroller nach Anspruch 15, **dadurch gekennzeichnet, dass** die zum Lagerkranz der Taumelscheibe (17) gerichtete Anlagefläche des Führungsstiftes (28a) mit einer der äußeren Krümmung des Lagerkranzes entsprechenden Krümmung ausgebildet ist.

17. Selbstsperrender Gurtaufroller nach Anspruch 15 oder 16, **dadurch gekennzeichnet, dass** zwischen dem Lagerkranz und der Leiste ein radialer Steg zur radialen Aussteuerung des Führungsstiftes (28a) des Schalthebels (28) aus seiner durch den Lagerkranz gebildeten Steuerkurve für den ELR-Schaltzustand zur Anlage an der inneren Steuerkurve (30) der Leiste während des ALR-Schaltzustandes angeordnet ist, der von dem Führungsstift (28a) am Ende des Gurtbandauszuges erreicht wird, und dass die innere Steuerkurve (30) in einem Umfangsabstand zum Steg einen radial einwärts zum Lagerkranz gerichteten Abschnitt zur Umsteuerung des Führungsstiftes (28a) von der inneren Steuerkurve (30) der Leiste zur Steuerkurve am Lagerkranz aufweist.

18. Selbstsperrender Gurtaufroller nach einem der Ansprüche 2 bis 17, **dadurch gekennzeichnet, dass** Sperrhebel (27) und Schalthebel (28) in unterschiedlichen in Axialrichtung der Steuerscheibe (13) versetzten Ebenen angeordnet sind und der Sperrhebel (27) einen in die Bewegungsebene des Schalthebels (28) reichenden und den Führungsstift (27a) tragenden Aufsatz aufweist, der in wenigstens einer Schaltstellung des Sperrhebels (27) mit dem Schalthebel (28) zusammenwirkt.

19. Selbstsperrender Gurtaufroller nach Anspruch 18, **dadurch gekennzeichnet, dass** sich die Trägheitsmasse (15) in ihrer axialen Höhe über beide Bewegungsebenen von Sperrhebel (27) und Schalthebel (28) erstreckt und einen in der Bewegungsebene des Schalthebels (28) angeordneten Ausschnitt zur Aufnahme des Schalthebels (28) aufweist.

20. Selbstsperrender Gurtaufroller nach einem der Ansprüche 1 bis 19, **dadurch gekennzeichnet, dass** an dem Sperrhebel (27) zusätzlich wenigstens ein in seiner Abschaltstellung in eine an der Gurtwelle (34) ausgebildete Umfangsausnehmung (34) in Eingriff gelangender Sperrzahn (33) zur festen Verbindung von Gurtwelle (10) und Steuerscheibe (13) angeordnet ist.

21. Selbstsperrender Gurtaufroller nach einem Ansprüche 1 bis 20, **dadurch gekennzeichnet, dass** die Steuerscheibe (13) mit den daran gelagerten Funktionsteilen Trägheitsmasse (15), Sperrhebel (27) und Schalthebel (28) sowie die Taumelscheibe (17) in die topfförmig ausgebildete Abdeckkappe (19) zur Bildung einer Vormontage-Baugruppe einsetzbar und darin festlegbar ist.

22. Selbstsperrender Gurtaufroller nach einem der Ansprüche 1 bis 21, **dadurch gekennzeichnet, dass** Steuerscheibe (13) und Taumelscheibe (17) gemeinsam auf einem Adapterstück (21) angeordnet sind und das Adapterstück (21) einerseits in der Gehäusekappe (19) und andererseits an einem Fortsatz (11) der Gurtwelle (10) festlegbar ist und dadurch die Lagerung der Gurtwelle (10) in der Gehäusekappe (19) ausbildet.

23. Selbstsperrender Gurtaufroller nach Anspruch 22, **dadurch gekennzeichnet, dass** das Adapterstück (21) jeweils mit Gehäusekappe (19) und Wellenfortsatz (11) verrastbar ist.

24. Selbstsperrender Gurtaufroller nach Anspruch 22 oder 23, **dadurch gekennzeichnet, dass** das Adapterstück (21) in Formschluss auf dem Wellenfortsatz (11) festgelegt ist.

25. Selbstsperrender Gurtaufroller nach einem der Ansprüche 22 bis 24, **dadurch gekennzeichnet, dass** das Adapterstück (21)die Steuerscheibe (13) auf einem umlaufenden Flansch (35) trägt und dadurch die mit der Gehäusekappe (19) zu verrastende Vormontage-Baugruppe bildet, wobei der Wellenfortsatz (11) rastend in das an der Gehäusekappe (19) festgelegte Adapterstück (21) einsteckbar ist.

## Claims

1. Self-locking belt retractor in particular for motor vehicles, with a vehicle-sensitive and a belt-webbing-sensitive control system for the blocking arrangement of the belt retractor, having a blocking pawl (12) able to be guided into a toothing which is fixed to the housing, wherein the control system comprises a control disc (13), rotating with the belt shaft, coupled to the blocking pawl and constructed so as to be mass inert for the formation of the belt-webbing sensitive control, with an outer toothing (25) for the engagement of a sensor lever arranged on a vehicle sensor, wherein at least one locking lever (27), controlled by the rotation of the belt shaft, swivellable between an activation position and a cutoff position, is provided for the cutoff of the vehicle sensor (24) in a functional range in which almost the entire safety belt is wound on the belt shaft.(10), and wherein an arrangement is provided for the cutoff also of the belt-webbing-sensitive control in the above-mentioned functional range of the belt retractor, **characterized in that** for the formation of its mass inertia on the control disc (13) an inertia mass (15), able to be deflected into a blocking position for the control disc (13), is mounted swivellably, and that the locking lever (27) for the cutoff of the vehicle sensor (24) is mounted on the control disc (13) and with a switching process in its cutoff position cuts off both the vehicle sensor (24) and also secures the inertia mass (15) in a cutoff position which is different from the blocking position.

2. Self-locking belt retractor according to Claim 1, **characterized in that** the control disc (13) is constructed in two parts with a rotatable platform (14), coupled to the belt shaft (10), as carrier of the inertia mass (15) and of the locking lever (27), and with an outer ring (16), rotatable with respect to the platform (14) and having both an outer toothing (25) for the engagement of the sensor lever of the vehicle sensor (24) and also an inner toothing (26) for the engagement of the locking lever (27) in its activation position.

3. Self-locking belt retractor according to Claim 1 or 2, **characterized in that** the inertia mass (15) has a blocking tooth (40) coming in its blocking position into engagement with a peripheral toothing (20) formed on the inner side on a housing cap (19) overlapping the control system.

4. Self-locking belt retractor according to any of Claims 1 to 3, **characterized in that** on the control disc (13) an additional switching lever (28) is swivellably mounted for the switchover between the ELR switching state and the ALR switching state, which in its ALR switching position is guided in engagement with the peripheral toothing (20) of the housing cap (19) and in its ELR switching position is out of engagement with the peripheral toothing (20).

5. Self-locking belt retractor according to Claim 4, **characterized in that** the switching lever (28) is secured with a spring arm on a structure part (22) of the control disc (13), wherein with its radially deflected ALR switching position the spring arm arrives out of engagement with the structure part of the control disc.

6. Self-locking belt retractor according to any of Claims 1 to 5, **characterized in that** for simultaneous controlling both of the locking lever (27) and also of the switching lever (28), a wobble plate (17), driven by the belt shaft (10), with cams (30, 31) formed thereon, is provided for guide pins (27a, 28a) respectively formed on the locking lever (27) and on the switching lever (28) and guided on the cams (30, 31), and is arranged adjacent to the control disc (13).

7. Self-locking belt retractor according to Claim 6, **characterized in that** the wobble plate (17) is placed with an eccentrically arranged, internally toothed bearing bore on an externally toothed extension (22) of the control disc (13).

8. Self-locking belt retractor according to any of Claims 1 to 7, **characterized in that** the wobble plate (17) is guided in a bearing (29) formed eccentrically in the housing cap (19).

9. Self-locking belt retractor according to any of Claims 6 to 8, **characterized in that** the wobble plate (17) has a strip extending encircling at least over a partial periphery, projecting axially into the plane of the guide pins (27a, 28a) of locking lever (27) and switching lever (28) and has a bearing ring projecting parallel to the strip for the formation of the cams for the controlling of the guide pins (27a, 28a).

10. Self-locking belt retractor according to Claim 9, **characterized in that** the strip is arranged with a radial distance both from the bearing ring and also from the outer periphery of the wobble plate, and forms on its inner side an inner cam (30) and on its outer side an outer cam (31) for the guide pin (27a) of the locking lever (27), and at least one opening (32) is provided as a radial transition section for the passage of the guide pin (27a) between the inner cam (30) and the outer cam (31).

11. Self-locking belt retractor according to any of Claims 6 to 10, **characterized in that** the cams (30, 31) have on their running paths for the guide pins (27a, 28a) of locking lever (27) and switching lever (28) an undulating contour for the equalizing of the wobble plate movements with respect to the guide pins (27a, 28a), revolving with the control disc (13), of locking lever (27) and switching lever (28).

12. Self-locking belt retractor according to any of Claims 9 to 11, **characterized in that** the strip with the cams (30, 31) formed thereon extends over the entire periphery of the wobble plate (17) such that the guide pin (27a) of the locking lever (27) is guided on the cams (30, 31) during the entire rolling and unrolling movement of the belt webbing.

13. Self-locking belt retractor according to any of Claims 9 to 11, **characterized in that** the strip with the cams (30, 31) formed thereon only extends over the partial region of the periphery of the wobble plate (17), which is travelled through by the guide pin (27a) of the locking lever (27) after initial belt webbing withdrawal in its outwardly guided position in engagement with the inner toothing (26) of the ring (16), and that in the remaining peripheral region on the wobble plate (17) radially outwardly directed cross-pieces, spaced apart from each other, are arranged to receive the guide pin (27a) of the locking lever (27) between them.

14. Self-locking belt retractor according to Claim 13, **characterized in that** the cross-pieces in the peripheral direction travelled through on the initial belt webbing withdrawal by the guide pin (27a) are arranged with an adapted position aligned obliquely to the peripheral direction, and at their inner end have a flattened introduction surface for the guiding in of the guide pin (27a) between the cross-pieces.

15. Self-locking belt retractor according to any of Claims 6 to 14, **characterized in that** the outer periphery of the bearing ring of the wobble plate (17) forms a third cam for the controlling of the guide pin (28a) of the switching lever (28) during the ELR switching state of the switching lever (28).

16. Self-locking belt retractor according to Claim 15, **characterized in that** the contact surface of the guide pin (28a), directed to the bearing ring of the wobble plate (17), is formed with a curvature corresponding to the outer curvature of the bearing ring.

17. Self-locking belt retractor according to Claim 15 or 16, **characterized in that** between the bearing ring and the strip, a radial cross-piece is arranged for the radial guiding out of the guide pin (28a) of the switching lever (28) from its cam formed by the bearing ring for the ELR switching state for abutment against the inner cam (30) of the strip during the ALR switching state, which is reached by the guide pin (28a) at the end of the belt webbing withdrawal, and that the inner cam (30) at a peripheral distance from the cross-piece has a section directed radially inwards to the bearing ring for the guiding over of the guide pin (28a) from the inner cam (30) of the strip to the cam on the bearing ring.

18. Self-locking belt retractor according to any of Claims 2 to 17, **characterized in that** locking lever (27) and switching lever (28) are arranged in different planes staggered in axial direction of the control disc (13), and the locking lever (27) has an attachment extending into the movement plane of the switching lever (28) and carrying the guide pin (27a), which in at least one switching position of the locking lever (27) cooperates with the switching lever (28).

19. Self-locking belt retractor according to Claim 18, **characterized in that** the inertia mass (15) extends in its axial height over both movement planes of locking lever (27) and switching lever (28) and has a cutout, arranged in the movement plane of the switching lever (28), to receive the switching lever (28).

20. Self-locking belt retractor according to any of Claims 1 to 19, **characterized in that** on the locking lever (27) in addition at least one locking tooth (33), coming into engagement in its cutoff position into a peripheral recess (34) formed on the belt shaft (34), is arranged for the secure connection of belt shaft (10) and control disc (13).

21. Self-locking belt retractor according to any of Claims 1 to 20, **characterized in that** the control disc (13) with the functional parts of inertia mass (15), locking lever (27) and switching lever (28) mounted thereon, and the wobble plate (17), is able to be inserted into the covering cap (19), formed in a cup shape, for the formation of a pre-mounting assembly, and is able to be secured therein.

22. Self-locking belt retractor according to any of Claims 1 to 21, **characterized in that** control disc (13) and wobble plate (17) are arranged together on an adapter piece (21), and the adapter piece (21) is able to be secured on the one hand in the housing cap (19) and on the other hand on an extension (11) of the belt shaft (10) and thereby forms the bearing of the belt shaft (10) in the housing cap (19).

23. Self-locking belt retractor according to Claim 22, **characterized in that** the adapter piece (21) is able to be engaged respectively with housing cap (19) and shaft extension (11).

24. Self-locking belt retractor according to Claim 22 or 23, **characterized in that** the adapter piece (21) is secured in a form fit on the shaft extension (11).

25. Self-locking belt retractor according to any of Claims 22 to 24, **characterized in that** the adapter piece (21) carries the control disc (13) on an encircling flange (35) and thereby forms the pre-mounting assembly which is to be engaged with the housing cap (19), wherein the shaft extension (11) is able to be inserted engaging into the adapter piece (21) which is secured on the housing cap (19).

## Revendications

1. Enrouleur de ceinture autobloquant en particulier pour des véhicules automobiles, avec un système de commande réagissant à la sangle de ceinture et réagissant au véhicule pour le dispositif de blocage présentant un cliquet de blocage (12) pouvant être introduit dans une denture fixée au boîtier de l'enrouleur de ceinture, sachant que le système de commande comporte un disque de commande (13) tournant avec l'arbre de ceinture (10), couplé au cliquet de blocage (12) et réalisé de manière inertielle pour la réalisation de la commande réagissant à la sangle de ceinture avec une denture extérieure (25) pour l'engagement d'un levier de capteur disposé sur un capteur de véhicule, sachant qu'il est prévu au moins un levier de blocage (27) commandé par la rotation de l'arbre de ceinture, pouvant pivoter entre une position de mise en service et une position de mise hors service pour la mise hors service du capteur de véhicule (24) dans une zone fonctionnelle, dans laquelle presque toute la ceinture de sécurité est enroulée sur l'arbre de ceinture (10), et sachant qu'un dispositif de mise hors service aussi de la commande réagissant à la sangle de ceinture est prévu dans la zone fonctionnelle précitée de l'enrouleur de ceinture, **caractérisé en ce que** pour la réalisation de son inertie de masse, une masse d'inertie (15) pouvant être déviée dans une position de blocage pour le disque de commande (13) est logée de manière à pouvoir pivoter sur le disque de commande (13) et **en ce que** le levier de blocage (27) est logé pour la mise hors service du capteur de véhicule (24) sur le disque de commande (13) et met hors service avec un processus de commutation dans sa position de mise hors service non seulement le capteur de véhicule (24) mais détermine aussi la masse d'inertie (15) dans une position de mise hors service différente pour la position de blocage.

2. Enrouleur de ceinture autobloquant selon la revendication 1, **caractérisé en ce que** le disque de commande (13) est réalisé en deux parties avec une plateforme (14) rotative couplée à l'arbre de ceinture (10) comme support de la masse d'inertie (15) ainsi que du levier de blocage (27) et avec un anneau (16) extérieur, rotatif par rapport à la plateforme (14) et présentant non seulement une denture extérieure (25) pour l'engagement du levier du capteur de véhicule (24) mais aussi une denture intérieure (26) pour l'engagement du levier de blocage (27) dans sa position de mise en service.

3. Enrouleur de ceinture autobloquant selon la revendication 1 ou 2, **caractérisé en ce que** la masse d'inertie (15) présente une dent de blocage (40) parvenant dans sa position de blocage en engagement avec une denture périphérique (20) réalisée côté intérieur sur un chapeau de boîtier (19) recouvrant le système de commande.

4. Enrouleur de ceinture autobloquant selon l'une quelconque des revendications 1 à 3, **caractérisé en ce qu'**un levier de commutation (28) supplémentaire est logé de manière pivotante sur le disque de commande (13) pour la commutation entre l'état de commutation ELR et l'état de commutation ALR, lequel levier est réglé dans sa position de commutation ALR en engagement avec la denture périphérique (20) du chapeau de boîtier (19) et est désengagé dans sa position de commutation ELR de la denture périphérique (20).

5. Enrouleur de ceinture autobloquant selon la revendication 4, **caractérisé en ce que** le levier de commutation (28) est fixé avec un bras de ressort sur une partie structurelle (22) du disque de commande (13), sachant que pour sa position de commutation ALR déviée radialement, le bras de ressort parvient hors engagement avec la partie structurelle du disque de commande.

6. Enrouleur de ceinture autobloquant selon l'une quelconque des revendications 1 à 5, **caractérisé en ce que** pour la commande simultanée non seulement du levier de blocage (27) mais aussi du levier de commutation (28), un plateau oscillant (17) entraîné par l'arbre de ceinture (10) est prévu avec des cames de commande (30, 31) réalisées dessus pour des tiges de guidage (27a, 28a) réalisées respectivement sur le levier de blocage (27) et sur le levier de commutation (28) et guidées sur les cames de commande (30, 31) et est disposé à côté du disque de commande (13).

7. Enrouleur de ceinture autobloquant selon la revendication 6, **caractérisé en ce que** le plateau oscillant (17) est placé avec un alésage de palier à denture intérieure, disposé de manière excentrée sur un épaulement (22) à denture extérieure du disque de commande (13).

8. Enrouleur de ceinture autobloquant selon l'une quelconque des revendications 1 à 7, **caractérisé en ce que** le plateau oscillant (17) est guidé dans un logement (29) réalisé de manière excentrée dans le chapeau de boîtier (19).

9. Enrouleur de ceinture autobloquant selon l'une quelconque des revendications 6 à 8, **caractérisé en ce que** le plateau oscillant (17) prévoit une baguette dépassant axialement dans le plan des tiges de guidage (27a, 28a) du levier de blocage (27) et du levier de commutation (28), s'étendant de manière périphérique au moins sur une périphérie partielle ainsi qu'une couronne de palier dépassant parallèlement à la baguette pour la réalisation des cames de commande pour la commande des tiges de guidage (27a, 28a).

10. Enrouleur de ceinture autobloquant selon la revendication 9, **caractérisé en ce que** la baguette est disposée à une distance radiale non seulement de la couronne de palier mais aussi de la périphérie extérieure du plateau oscillant et réalise sur son côté intérieur une came de commande intérieure (30) et sur son côté extérieur une came de commande extérieure (31) pour la tige de guidage (27a) du levier de blocage (27) et au moins une perforation (32) est prévue comme section de transition radiale pour le passage de la tige de guidage (27a) entre la came de commande intérieure (30) et la came de commande extérieure (31).

11. Enrouleur de ceinture autobloquant selon l'une quelconque des revendications 6 à 10, **caractérisé en ce que** les cames de commande (30, 31) présentent, sur leurs voies de lancement pour les tiges de guidage (27a, 28a) du levier de blocage (27) et du levier de commutation (28), un contour ondulé pour la compensation des mouvements de plateau oscillant par rapport aux tiges de guidage (27a, 28a) tournant avec le disque de commande (13) du levier de blocage (27) et du levier de commutation (28).

12. Enrouleur de ceinture autobloquant selon l'une quelconque des revendications 9 à 11, **caractérisé en ce que** la baguette s'étend avec les cames de commande (30, 31) réalisées dessus sur toute la périphérie du plateau oscillant (17) de telle manière que la tige de guidage (27a) du levier de blocage (27) soit guidée pendant le mouvement entier d'enroulement et déroulement de la sangle de ceinture sur les cames de commande (30, 31).

13. Enrouleur de ceinture autobloquant selon l'une quelconque des revendications 9 à 11, **caractérisé en ce que** la baguette s'étend avec les cames de commande (30, 31) réalisées dessus seulement sur la zone partielle de la périphérie du plateau oscillant (17), laquelle est traversée par la tige de guidage (27a) du levier de blocage (27) après le premier tirage de la sangle de ceinture dans sa position réglée vers l'extérieur en engagement avec la denture intérieure (26) de l'anneau (16), et **en ce que** des nervures espacées les unes des autres, dirigées radialement vers l'extérieur sont disposées pour le logement de la tige de guidage (27a) du levier de blocage (27) entre elles dans la zone périphérique restante sur le plateau oscillant (17).

14. Enrouleur de ceinture autobloquant selon la revendication 13, **caractérisé en ce que** les nervures sont disposées dans le sens périphérique traversé lors du premier tirage de sangle de ceinture par la tige de guidage (27a) avec une position adaptée, orientée en biais par rapport au sens périphérique et présentent sur leur extrémité intérieure une surface d'introduction aplatie pour l'introduction de la tige de guidage (27a) entre les nervures.

15. Enrouleur de ceinture autobloquant selon l'une quelconque des revendications 6 à 14, **caractérisé en ce que** la périphérie extérieure de la couronne de palier du plateau oscillant (17) réalise une troisième came de commande pour la commande de la tige de guidage (28a) du levier de commutation (28) pendant l'état de commutation ELR du levier de commutation (28).

16. Enrouleur de ceinture autobloquant selon la revendication 15, **caractérisé en ce que** la surface d'appui dirigée vers la couronne de palier du plateau oscillant (17) de la tige de guidage (28a) est réalisée avec une courbure correspondant à la courbure extérieure de la couronne de palier.

17. Enrouleur de ceinture autobloquant selon la revendication 15 ou 16, **caractérisé en ce qu'**une nervure radiale est disposée entre la couronne de palier et la baguette pour le réglage radial de la tige de guidage (28a) du levier de commutation (28) à partir de sa came de commande formée par la couronne de palier pour l'état de commutation ELR pour l'appui contre la came de commande intérieure (30) de la baguette pendant l'état de commutation ALR qui est atteint par la tige de guidage (28a) à la fin de l'extraction de la sangle de ceinture, et **en ce que** la came de commande intérieure (30) présente dans une distance périphérique par rapport à la nervure une section dirigée radialement vers l'intérieur vers la couronne de palier pour le changement de sens de la tige de guidage (28a) de la came de commande (30) intérieure de la baguette à la came de commande sur la couronne de palier.

18. Enrouleur de ceinture autobloquant selon l'une quelconque des revendications 2 à 17, **caractérisé en ce que** le levier de blocage (27) et le levier de commutation (28) sont disposés dans différents plans déplacés dans le sens axial du disque de commande (13) et le levier de blocage (27) présente un recouvrement portant la tige de guidage (27a) et parvenant dans le plan de mouvement du levier de commutation (28), lequel recouvrement coagit dans au moins une position de commutation du levier de blocage (27) avec le levier de commutation (28).

19. Enrouleur de ceinture autobloquant selon la revendication 18, **caractérisé en ce que** la masse d'inertie (15) s'étend dans sa hauteur axiale sur les deux plans de mouvement du levier de blocage (27) et du levier de commutation (28) et présente une entaille disposée dans le plan de mouvement du levier de commutation (28) pour le logement du levier de commutation (28).

20. Enrouleur de ceinture autobloquant selon l'une quelconque des revendications 1 à 19, **caractérisé en ce qu'**en outre, au moins une dent de blocage (33) parvenant en engagement dans sa position de mise hors service dans un évidement périphérique (34) réalisé sur l'arbre de ceinture (34) est disposée sur le levier de blocage (27) pour la liaison fixe de l'arbre de ceinture (10) et du disque de commande (13).

21. Enrouleur de ceinture autobloquant selon l'une quelconque des revendications 1 à 20, **caractérisé en ce que** le disque de commande (13) peut être inséré et fixé avec les parties fonctionnelles logées dessus la masse d'inertie (15), le levier de blocage (27) et le levier de commutation (28) ainsi que le plateau oscillant (17) dans le chapeau (19) réalisé en forme de pot pour la formation d'un ensemble de prémontage.

22. Enrouleur de ceinture autobloquant selon l'une quelconque des revendications 1 à 21, **caractérisé en ce que** le disque de commande (13) et le plateau oscillant (17) sont disposés ensemble sur une pièce d'adaptation (21) et la pièce d'adaptation (21) peut être fixée d'une part dans le chapeau de boîtier (19) et d'autre part sur un prolongement (11) de l'arbre de ceinture (10) et réalise par là-même le logement de l'arbre de ceinture (10) dans le chapeau de boîtier (19).

23. Enrouleur de ceinture autobloquant selon la revendication 22, **caractérisé en ce que** la pièce d'adaptation (21) peut être encliquetée respectivement avec le chapeau de boîtier (19) et le prolongement d'arbre (11).

24. Enrouleur de ceinture autobloquant selon la revendication 22 ou 23, **caractérisé en ce que** la pièce d'adaptation (21) est fixée positivement sur le prolongement d'arbre (11).

25. Enrouleur de ceinture autobloquant selon l'une quelconque des revendications 22 à 24, **caractérisé en ce que** la pièce d'adaptation (21) porte le disque de commande (13) sur une bride périphérique (35) et par là-même forme l'ensemble de prémontage à encliqueter avec le chapeau de boîtier (19), sachant que le prolongement d'arbre (11) peut être emboîté par encliquetage dans la pièce d'adaptation (21) fixée sur le chapeau de boîtier (19).
